(19) Europäisches Patentamt

European Patent Office

Office européen des brevets

(11) EP 1 537 961 A2

(12) **EUROPÄISCHE PATENTANMELDUNG**

(43) Veröffentlichungstag:
08.06.2005 Patentblatt 2005/23

(51) Int Cl.$^7$: **B25J 9/16**

(21) Anmeldenummer: 05075178.3

(22) Anmeldetag: **12.11.1999**

(84) Benannte Vertragsstaaten:
**AT BE CH CY DE DK ES FI FR GB GR IE IT LI LU MC NL PT SE**

(30) Priorität: **12.11.1998 DE 19854011**

(62) Dokumentnummer(n) der früheren Anmeldung(en) nach Art. 76 EPÜ:
**99956269.7 / 1 135 237**

(71) Anmelder: **Knoll, Alois**
**49326 Melle (DE)**

(72) Erfinder:
• **Knoll, Alois**
**49326 Melle (DE)**
• **Kovacs, Peter**
**10785 Berlin (DE)**

(74) Vertreter: **Effert, Bressel und Kollegen**
**Radickestrasse 48**
**12489 Berlin (DE)**

Bemerkungen:
Diese Anmeldung ist am 24 - 01 - 2005 als Teilanmeldung zu der unter INID-Kode 62 erwähnten Anmeldung eingereicht worden.

(54) **Verfahren und Vorrichtung zur Verbesserung der Stellungsgenauigkeit von Effektoren an Mechanismen und zur Vermessung von Objekten in einem Arbeitsraum**

(57) Die Erfindung betrifft ein Verfahren und eine Vorrichtung zur Verbesserung der Stellungsgenauigkeit von Mechanismen in einem Arbeitsraum. Ein Mechanismus (23-2) verfügt über einen Effektor. Ein Effektorobjekt ist starr mit dem Effektor verbunden. Ein immaterielles Referenzobjekt (23-1) ist vorhanden, das stationär im Arbeitsraum angeordnet ist und dessen Stellung exakt bekannt ist. Ein Computersystem weist ein Meßablauf- und ein Mechanismus-Steuerungsprogramm auf. Je ein Effektor- und Referenzobjekt bilden Paare von Signalauslösern und Signaldetektoren, geeignet eine Auslösung und Detektion von Signalen zu bewirken. Eine Näherungsserie N wird so gewählt, daß sie an mindestens einem einer Zielstellung benachbarten Referenzobjekt eine Näherungsstellung enthält. Für alle Näherungsstellungen wird je eine nahegelegene Signalstellung gesucht. Nach Detektion wird eine momentane Gelenkkonfiguration des Mechanismus an das Computersystem weitergeleitet. Das Computersystem rechnet diejenige Fehlstellung im Arbeitsraum aus, die sich auf Basis der der Steuerung aktuell bekannten Mechanismenparameter ergibt. Aus der Differenz zwischen den Signalstellungen und den zugehörigen Fehlstellungen wird eine Korrekturbewegung berechnet, die die Abweichung der durch die Mechanismen-Steuerung tatsächlich angesteuerten Stellung von der Sollstellung kompensiert.

fig. 19

**Beschreibung**

Die Erfindung betrifft ein Verfahren und eine Vorrichtung zur Verbesserung der Stellungsgenauigkeit von Effektoren an Mechanismen sowie deren Anwendung bei der Vermessung der Stellung von Objekten in einem Arbeitsraum mit einem in mindestens einer Achse bewegbaren, mit Toleranzen behafteten Mechanismus, der über einen Effektor verfügt, mindestens einem Effektorobjekt, das in geschätzter Stellung mit Toleranz in Position und Orientierung exzentrisch zu den Achsen des Mechanismus starr mit dem Effektor verbunden ist , mindestens einem Referenzobjekt, das relativ zum Mechanismus stationär im Arbeitsraum angeordnet ist, sowie einem Computersystem mit Meß- und Steuerungsprogrammen, wobei je ein Effektorund Referenzobjekt Paare von in für sich bekannter Weise arbeitenden Signalauslösern und Signaldetektoren bilden, geeignet eine Auslösung und Detektion mindestens binärer Signale zu bewirken und bei denen für jedes Paar die Gesamtheit der Signalstellungen des Detektors relativ zum Auslöser, in denen am Detektor ein Signal ausgelöst wird, durch mindestens eine nichttriviale charakteristische Gleichung beschreibbar ist.

Es sind schon eine Reihe von gattungsgemäßen Verfahren mit entsprechenden Vorrichtungen bekannt.

Aus der FR-A-2 696 969 ist ein Eichverfahren bekannt, bei dem ein Laserstrahl am letzten Segment des Roboter befestigt wird und eine Meßebene in der Nähe des Roboters als Referenz benutzt wird. Der Roboter fährt eine Reihe von nicht näher spezifizierten Handstellungen an, in denen der Laserstrahl die Meßebene trifft. Danach werden die Koordinaten der Treffpunkte auf der Meßebene photographisch identifiziert. Aus diesen werden zusammen mit den zugehörigen Gelenkkonfigurationen, den Schätzwerten für die Stellung der Meßebene und der Stellung des Lasers relativ zur Hand die Roboterparameter mittels einer Variante des Newtonschen Ausgleichsverfahrens (Levenberg-Marquardt Verfahren) berechnet.

In der primären Realisierung ist die Meßebene ein Spiegel bzw. undurchsichtiger Projektionsschirm und der auftreffende Laserstrahl wird von einer vor dem Spiegel stehenden Kamera aufgenommen. Die Verwendung von Merkzeichen auf dem Projektionsschirm wird nicht näher erläutert und soll offenbar der Herstellung eines Bezugs zwischen Kamera und Projektionsschirm dienen.

Die Meßebene kann auch als optischer Matrix-Sensor ausgelegt sein.

Gemäß weiterer Realisierungen werden zwei Meßserien aufgenommen, zwischen denen entweder der Laser an einer anderen Stelle montiert wird, deren Position die Orientierung wird nicht erwähnt mit bezug auf eine Werkzeug-Unterstützung, z.B. Punkt der Hand, bekannt ist oder die Position des Spiegels verändert wird.

Die veränderten Stellungen werden nicht näher spezifiziert. Erläutert wird dazu: Wenn die Meßserie unklug gewählt wird, können für einige der zu identifizierenden Parameter rechnerisch mehrere Werte in Frage kommen. Um diese Unannehmlichkeit zu vermeiden werden zwei verschiedene Spiegelstellungen vorgeschlagen. Problematisch ist dabei, daß man mit einem Laserstrahl kann man die Lage des Lasers bzw. des Werkezugs relativ zur Handwurzel nicht vollständig bestimmen und zusätzlich 2 gekreuzte Laserstrahlen werden benutzt um den 5. und 6. Parameter der Werkzeuglage zu identifizieren. Im übrigen ist das System ungenau wegen der Verzerrung der Abbildung der Meßebene mit der Kamera.

Weitere Versuche, Roboterparameter zu ermitteln, sind offenbar in einem Aufsatz von Newman, Osborn, ⊓A new method for kinematic parameter calibration via laser line tracking⊓, Proc. Int. Conf. Robotics and Automation, USA, Atlanta (1993), S. 160 -165)

Ein Laserstrahl wird in der Nähe des Roboters stationär im Raum aufgestellt. An der Roboterhand wird ein spezieller Detektor befestigt. Dieser besteht aus einem ebenen, quadratischen Lichtsensor, der in vier getrennte Quadranten unterteilt ist. Die Quadranten stoßen an einem ⊓Mittelpunkt⊓ zusammen. Jeder der vier Quadranten-Sensoren liefert einen Helligkeitswert. Der Roboter bewegt die Hand nacheinander in verschiedene Meßstellungen, welche dadurch definiert sind, daß die von den vier Sensoren gleiferte Helligkeitswert identisch ist. Zum Auffinden der geeigneten Stellungen werden die vier Helligkeitswerte der vier Quadranten genutzt, die ständig ausgewertet werden und die korrekten Bewegungen. Aus den Gelenkkonfigurationen der Meßstellungen sowie den Schätzwerten für die Stellung des Lasers sowie des Detektors relativ zur Hand werden die Roboterparameter mittels des Newtonschen Ausgleichsverfahrens berechnet. Die Autoren beschreiben einen prinzipiellen Versuchsaufbau und referieren dann Ergebnisse einer zweidimensionalen Simulation ihres Prinzips anhand eines zwei-gelenkigen, zweidimensionalen Roboters. Es können nicht alle kinematischen Parameter mit dem Verfahren ermittelt werden, insbesondere kann die Stellung des Roboters relativ zu einem vorgegebenen Koordinatensystem nicht bestimmt werden, sondern nur dimensionslose Parameter, somit sei es unmöglich, einen absoluten Größenmaßstab des Roboters herzuleiten.

Es wird nicht erklärt, was im drei-dimensionalen Raum zu passieren hat, falls die Sensorebene nicht senkrecht auf dem Laserstrahl steht.

Es muß stets die Sensorebene senkrecht zu dem Laserstrahl stehen, daher ist keine Orientierungsänderungen möglich, was im Arbeitsraum eines Robots aber zwangsläufig passiert.

Die Nachkalibration kleiner Parameterveränderungen beschreibt ein Aufsatz ⊓Autonomous robot calibration using a trigger probe⊓von Zhong et al. in der US-Zeitschrift Robotics + Autonomous systems, 18 (1996) S. 395 ⊓ 410.

In der Nähe des Roboters werden drei Platten, die exakt senkrecht aufeinander stehen, angebracht. Der Roboter nimmt einen omnidirektionalen mechanischen Taster auf und fährt eine Reihe von nicht näher spezifizierten Handstellungen an, in denen der Taster die Platte berührt bzw. der interne Kontakt des Tasters anspricht. Die jeweiligen zugehörigen Gelenkkonfigurationen werden von einem neuronalen Netz ausgewertet, welches als Ergebnis die Roboterparameter liefert.

Wahre Größen können mit dem Verfahren nicht ermittelt werden, weil nur relative Änderungen erkannt werden; es fehlt eine Information, z.B. der wahre Abstand zwischen Robot und Platten, stellen die Autoren fest.

Die Schriften WO96/30 171 und WO 93/11 915 beschreiben Verfahren und Vorrichtung zur Kalibration von Bewegungsachsen von Indurstrierobotern.

In der WO 96/30 171 wird ein Kalibrationsgerät verwendet, welches aus einem Kalibrationsstrahl z.B. Laser im Arbeitsraum des Roboters und einem zugehörigen Unterbrechungsdetektor besteht. Eine Kugel mit bekanntem Radius wird an die Roboterhand montiert. Der Roboter fährt eine Reihe von nicht näher spezifizierten Handstellungen an, in denen der Kalibrationsstrahl von der Kugel unterbrochen wird. Aus den zugehörigen Gelenkkonfigurationen, den Schätzwerten für die Roboterstellung und der Stellung des Lasers relativ zur Hand werden die Kalibrationsparameter mittels des Newton-Gauss Verfahrens berechnet. In der bevorzugten Realisierung muß der Kalibrationsstrahl senkrecht auf der durch die Roboterbasis definierten x-y-Ebene stehen-. Es werden mit gewissen Ausnahmen sechs Kalibrationsparameter für jede Achse berechnet.

Die Genauigkeit der Kalibrationsparameter kann erhöht werden, indem diese mehrfach berechnet werden, wobei der Kalibrationsstrahl in unterschiedliche Positionen im Arbeitsraum verbracht wird. Für die verschiedenen Stellungen werden dann z.B. die Kalibrationsparameter als Mittelwert der Kalibrationsparameter für die verschiedenen Strahlstellungen berechnet. Um die größten Variationen zwischen den verwendeten Roboterkonfigurationen zu erhalten, kann der Roboter mit mehreren Kalibrationsstrahlen ausgestattet werden, deren Stellung so gewählt wird, daß die größt-möglichen Unterschiede zwischen den Roboterkonfigurationen während der verschiedenen Messungen erreicht wird .

Gemäß der WO 93/ 11915 wird ein Kalibrationskörper verwendet, welcher aus einem Quader mit exakt parallelen Seitenflächen im Arbeitsraum des Roboters besteht. Eine Kugel mit bekanntem Radius wird an die Roboterhand montiert. Der Roboter fährt eine Reihe von nicht näher spezifizierten Handstellungspaaren an, in denen die Kugel den Quader eimal auf einer beliebigen Quaderseite berührt und das andere mal auf der gegenüberliegenden Seite. Die Darstellung sowie die Art und Weise der späteren Berechnung deuten an, daß der zweite Berührpunkt exakt am lotrecht dem ersten Punkt gegenüberliegenden Quaderpunkt liegen muß.

Die Berechnung der Roboterparameter erfolgt in Iterationsschritten. In jedem Schritt werden auf Basis der aktuellen Näherungswerte für alle vom Erfinder gesuchten Parameter zunächst die jeweils relevanten Koordinatendifferenzen der zusammengehörigen Handstellungspaare ermittelt. Falls die Quadratsumme dieser Differenzen von einem Sollwert abweicht, der sich aus den bekannten Quaderabmessungen ergibt, wird ein Gauss-Newton Schritt durchgeführt.

In einer Realisierung muß der Kalibrationskörper an den Koordinatenachsen der Roboterbasis ausgerichtet werden. In einer weiteren Realisierung kann die Orientierung des Kalibrationskörpers beliebig sein. Angeblich sind dazu drei zusätzliche Gleichungen erforderlich, um die drei zusätzlichen Orientierungsparameter zu identifizieren.

Beide Systeme liefern keine exakten Werte, da offensichtlich die mathematischen und kinematischen Zusammenhänge nicht erkannt wurden.

Von daher liegt der Erfindung das Problem zugrunde, verbesserte Verfahren und Vorrichtungen zur Bestimmung aller die Stellung bzw. die Stellungsgenauigkeit beeinflussenden Parameter des gattungsgemäßen Mechanismus in wahrer Größe, oder zur möglichst genauen, direkten Ansteuerung von Zielstellungen vorzuschlagen, die ohne Verwendung herkömmlicher Meßinstrumente, hinderlicher Hilfsobjekte im Arbeitsraum oder manueller teach-in-Verfahren auskommen, bei sehr günstigem Kosten- /Nutzenverhältnis.

Es soll auch möglich sein, die exakte Stellung eines Referenzpunktes am Mechanismus bezüglich seiner Umgebung und zu einem Objekt im Arbeitsraum oder zwischen Objekten in wahrer Größe zu ermitteln.

Das Problem wird durch die Gegenstände mit den Merkmalen der beigefügten Ansprüche und/oder der unten aufgelisteten Punkte gelöst. Weiterbildungen der Erfindung sind ebenfalls dort definiert.

Das erfindungsgemäße Verfahren der angegebenen Gattung enthält in einer ersten Lösung folgende Verfahrensschritte:

a. an jedem Auslöser-Detektor Paar wird eine Näherungsserie $N$ von endlich vielen in der Nähe von Signalstellungen gelegenen Näherungsstellungen durch ein Meßablaufprogramm so gewählt, daß folgende Kriterien möglichst weit übererfüllt sind:

$$D_G(N) > D_G(A_I) \; / \; 15,$$

wobei

der Abstand auf einer Geraden $G$ zwischen zwei benachbarten Punkten der Projektion der Näherungsserie $N$ auf G höchstens $D_G(N)/4$ beträgt,
wobei bedeuten
$D_G$ eine Funktion, die einer beliebigen Untermenge von $A_I$ die Distanz zwischen den beiden am weitesten voneinander entfernten Punkten der Projektion der Untermenge auf $G$ zuordnet,

$A_I$ : der sich aufgrund elementarer kinematischer Berechnungen aus dem bekannten toleranzbehafteten Mechanismenmodell ergebende Raum aller erreichbaren Effektorstellungen dieses Mechanismus und

$G$ : eine beliebige Gerade, die mindestens zwei Punkte von $S_I$ enthält,

$S_I$ : Untermenge von $A_I$, die als Raum der Näherungsstellungen bezeichnete Gesamtheit aller Effektorobjektstellungen, in denen auf Basis der Parameterwerte

- des bekannten toleranzbehafteten Mechanismenmodells,
- der geschätzten Stellung des Referenzobjekts im Raum sowie
- der geschätzten Stellung des Effektorobjekts am Mechanismus rechnerisch ein Signal erwartet würde,

b. für alle Näherungsstellungen werden nacheinander durch Bewegung des Effektorobjekts bzw. Mechanismus mit einer einfachen Suchalgorithmus je eine nahegelegene Signalstellung gesucht,
c. nach Detektion wird die momentane Gelenkkonfiguration des Mechanismus an das Computersystem weitergeleitet und als Datensatz gespeichert,
d. sodann wird ein Parameteridentifikationsprogramm mittels für sich bekannter Methoden der Ausgleichsrechnung aus allen gespeicherten Datensätzen sowie den zugehörigen charakteristischen Gleichungen die die Stellungsgenauigkeit des Mechanismus beeinflussenden Parameter oder benutzerspezifizierte Teile dieser Parametermenge in ihrer wahren Größe bestimmt,

wobei zur Bestimmung der Längenparameter ein ermittelter Skalierungsfaktor eingeht.

Im Verfahren wird der Skalierungsfaktor im Prinzip allgemein bestimmt, indem alternativ entweder

- das Effektorobjekt zunächst in zwei mindestens einelementige Mengen A und von Signalstellungen gebracht, wobei Informationen über den Abstand zwischen den Stellungen von A zu denen von B bekannt sind, oder
- mindestens drei als Referenz- und Effektorobjekte ausgebildete Kalibrationsobjekte werden verwendet, indem mindestens ein Effektorobjekt in Signalstellungen zu zwei Referenzobjekten mit bekannter relativer Stellung zueinander gebracht bzw.
- mindestens zwei Effektorobjekte mit bekannter relativer Stellung zueinander in Signalstellungen zu mindestens einem Referenzobjekt gebracht werden,

wobei der maßgebliche Abstand zwischen den Orten oder Objekten größer als 1/6 des Arbeitsraumdurchmessers $\Delta$, vorzugsweise ¾ $\Delta$ beträgt, wobei der Arbeitsraumdurchmesser durch das Maximum von $D_G(A_I)$ über alle Geraden $G$ bestimmt ist und bei der Abstandsbestimmung eine Mitteilung durchgeführt wird.
Verfahren kann auch zur vollständigen oder partiellen Nachkalibrierung der Mechanismen oder von Teilmechanismen angewendet werden.
Dabei finden Verfahren als Paare von Referenzobjekt-/Effektobjekt, allgemein Kalibrationsobjekte, die wahlweise vertauschbar sind, Verwendung :

i) Signaldetektor und geradenförmige elektromagnetische Welle/zylindrischer Unterbrecherstab;
ii) Signaldetektor und elektrisch leitender Draht-/ Kontaktstab;
iii iv) Laserstrahl / lichtempfindliche Matrixfläche;
v) elektrisch leitfähige Ebene / leitfähiger Kontaktstab;
v) Führung mit Kontaktschwelle an Drehachse/ geführter Stab an Drehachse;
vi) Punkt- oder ebenförmiger Signaldetektor/ Ebene elektromagnetischer Wellen.
vii) keilförmige elektromagnetische Welle / mehrere Signaldetektoren

Eine Vorrichtung zur Verbesserung der Stellungsgenauigkeit von Mechanismen in einem Arbeitsraum, insbesondere zur Durchführung der Verfahren umfaßt mindestens einen in mindestens einer Achse bewegbaren Mechanismus, der über einen Effektor nach Art einer Roboterhand oder eines Werkzeuges verfügt,

- mindestens ein Paar von Einrichtungen, ausgebildet als oder geeignet zur Generierung von Effektor- oder Referenzobjekten in Form eines geometrisch regelmäßigen Körpers als Kalibrationsobjekte, wobei
  mindestens eine Effektorobjekt-Einrichtung exzentrisch zu den Achsen des Mechanismus starr mit dem Effektor verbunden ist , und
  mindestens eine Referenzobjekt-Einrichtung, relativ zum Mechanismus stationär im oder am Arbeitsraum angeordnet ist, und jedes Paar von Einrichtungen über Elemente zur Auslösung und Detektion von binären Signalen verfügt,
- eine Einrichtung zur Ermittlung eines Skalierungsfaktors und
- ein Computersystem mit einem Meßablauf-, einem Parameteridentifizierungs- und einem Mechanismussteuerungs-Programm.

Diese Vorrichtung kommt in Fortbildung der Erfindung auch bei der Anwendung des Verfahrens zur Stellungsvermessung von Mechanismen und Objekten, absolut oder relativ zueinander, im Arbeitsraum zur Anwendung.

Eine zweite Lösung der Erfindung umfaßt ein Verfahren und eine Vorrichtung zur Verbesserung der Stellungsgenauigkeit von Mechanismen in einem Arbeitsraum mit

einem in mindestens einer Achse bewegbaren, mit Toleranzen behafteten Mechanismus, der über einen Effektor verfügt,

- mindestens einem Effektorobjekt, das in geschätzter Stellung mit Toleranz in Position und Orientierung exzentrisch zu den Achsen des Mechanismus starr mit dem Effektor verbunden ist ,
- mindestens einem immateriellen Referenzobjekt, das stationär im Arbeitsraum angeordnet ist und dessen Stellung exakt bekannt ist,
- sowie einem Computersystem mit einem Meßablauf- und einem Mechanismus-Steuerungsprogramm,

wobei je ein Effektor- und Referenzobjekt Paare von in für sich bekannter Weise arbeitenden Signalauslösern und Signaldetektoren bilden, geeignet eine Auslösung und Detektion mindestens binärer Signale zu bewirken und bei denen für jedes Paar die Gesamtheit der Signalstellungen des Detektors relativ zum Auslöser, in denen am Detektor ein Signal ausgelöst wird, durch mindestens eine nichttriviale charakteristische Gleichung beschreibbar ist, mit folgenden Verfahrensschritten:

a. die Näherungsserie N so gewählt wird, daß sie an mindestens einem der Zielstellung benachbarten Referenzobjekt mindestens eine Näherungsstellung enthält

b. für alle Näherungsstellungen werden nacheinander durch Bewegung des Effektorobjekts bzw. Mechanismus mit einem einfachen Suchalgorithmus je eine nahegelegene Signalstellung gesucht,

c. nach Detektion wird die momentane Gelenkkonfiguration des Mechanismus an das Computersystem weitergeleitet und als Datensatz gespeichert,

d. das Computersystem rechnet zu jedem Datensatz diejenige Fehlstellung im Arbeitsraum aus, die sich auf Basis der der Steuerung aktuell bekannten Mechanismenparameter ergibt

e. aus der Differenz zwischen den Signalstellungen und den zugehörigen Fehlstellungen durch für sich bekannte elementare Interpolationsverfahren sowie durch für sich bekannte elementare Fehlerausgleichsalgorithmen eine Korrekturbewegung berechnet wird, die die Abweichung der durch die Mechanismus-Steuerung tatsächlich angesteuerten Stellung von der Sollstellung kompensiert.

Die Erfindung löst zusammenschauend die aufgezeigten Probleme.

Die Lösung bestimmt effizient und präzise die die Stellungsgenauigkeit beeinflussenden Parameter des gattungsgemäßen Mechanismus mit sehr günstigem Kosten- / Nutzenverhältnis.

Erfindungsgemäß werden nur die ohnehin im Mechanismus vorhandenen Sensoren (Gelenkencoder) verwendet sowie einfachste zusätzliche Meßvorrichtungen, welche entsprechend dem grundlegenden Funktionsprinzip stets *einfachste binäre Sensoren* bzw. Detektoren sein können.

Außerdem kann effizient die Aufgabe gelöst werden, daß eine Nachkalibration nur bestimmte Parameter bestimmen muß (etwa solche, von denen bekannt ist, daß sie sich beim Betrieb des Mechanismus verschleißbedingt schneller ändern als andere). Damit kann erheblicher Aufwand gespart werden.

In der industriellen Praxis ganz besonders wichtig ist die vom Verfahren gebotene Möglichkeit, die Stellung eines Mechanismus in bezug auf die räumliche Lage einer Arbeitszelle exakt zu bestimmen.

Das erfindungsgemäße Verfahren eignet sich weiterhin dazu, durch ein lernfähiges System unterstützt zu werden, daß seinerseits die Restfehler des Kalibrationsprozesses erkennt und durch Training am realen Mechanismus bei dessen Ansteuerung kompensiert. Das lernende System kann dabei voll in das Gesamtverfahren integriert werden, was die Effizienz des lernenden Systems gegenüber bisherigen isolierten Lösungsansätzen signifikant steigert.

Ein ähnliches Verfahren wie die Kalibration, welches hier als Interpolation bezeichnet wird, wird zur alternativen oder zusätzlichen lokalen Verbesserung der Stellungsgenauigkeit benutzt, wobei keine zusätzlichen Vorrichtungen erforderlich sind.

Neben der Kalibration eines Mechanismus löst das erfindungsgemäße Verfahren in einer spezialisierten Variante die Aufgabe, mit begrenztem, einmaligen Vorbereitungsaufwand und äußerst geringem apparativen Aufwand präzise die Stellung

- des Effektors eines (nicht notwendig kalibrierten) Mechanismus relativ zu den Referenzobjekten bzw. einem Bezugskoordinatensystem oder
- von Werkstücken relativ zum Effektor von (nicht notwendig kalibrierten) Mechanismen oder
- zwischen beliebigen Objekten und/oder Mechanismen

zu bestimmen.

Durch Spezialisierung des erfindungsgemäßen Vermessungsverfahrens können Einrichtungen und Verfahren gewonnen werden, die sich speziell für die Kalibration eignen (Beschränkung auf ca. 2 bis 4 Referenzobjekte) oder speziell für die Stellungsvermessung (Konstruktion spezieller, einachsiger Meßmechanismen sowie spezieller Referenzobjekte, mit deren Hilfe (indirekt) die Stellung beliebiger Objekte zueinander bestimmt werden kann).

Die Überlegenheit dieses formabgleichenden Verfahrens gegenüber bisherigen Kalibrationsverfahrenzeigt sich in der praktischen Anwendung mindestens durch folgende Vorteile:

- Einfachste Installation der Meßeinrichtung;

- Keine Kalibration der Meßeinrichtung erforderlich;

- Geringste Kosten und Servicefreundlichkeit durch äußerst einfachen Meßaufbau;

- Berührungslose Messung möglich, damit keine Abnutzung des Meßaufbaus;

- Durchführung von Kalibrationen mit minimalem Vorbereitungsaufwand, dadurch häufige (z.B. tägliche) Wiederholung möglich;

- Gewährleistung der Absolutgenauigkeit von Mechanismen über ihre gesamte Lebensdauer;

- Integrierbarkeit der Meßeinrichtung in den Mechanismus, damit völliger Fortfall einer zusätzlichen Installation im Arbeitsbereich des Mechanismus;

- Teilkalibrationen möglich, dadurch erhebliche Zeiteinsparung;

Damit kommt es zu einer erheblichen Einsparung von Kosten und Personal für den Anwender kalibrationsbedürftiger Mechanismen bei Gewährleistung einer hohen Genauigkeit dieser Mechanismen und daraus folgender hoher Manipulationsgüte mit der Folge z.B. einer hohen Fertigungsqualität bei Anwendung auf Industrieroboter.

Die Erfindung umfasst insbesondere auch das Folgende. Dabei werden die folgenden Punkte nummeriert, um darauf Bezug nehmen zu können:

1. Verfahren zur Verbesserung der Stellungsgenauigkeit von Mechanismen in einem Arbeitsraum mit

- einem in mindestens einer Achse bewegbaren, mit Toleranzen behafteten Mechanismus, der über einen Effektor verfügt,
- mindestens einem Effektorobjekt, das in geschätzter Stellung mit Toleranz in Position und Orientierung exzentrisch zu den Achsen des Mechanismus starr mit dem Effektor verbunden ist ,
- mindestens einem Referenzobjekt, das relativ zum Mechanismus in geschätzter Stellung mit Toleranz in Position und Orientierung stationär im Arbeitsraum angeordnet ist,
- sowie einem Computersystem mit einem Meßablauf-,

Parameteridentifkations- und einem Mechanismus-Steuerungsprogramm, wobei je ein Effektor- und Referenzobjekt Paare von in für sich bekannter Weise arbeitenden Signalauslösern und Signaldetektoren bilden, geeignet eine Auslösung und Detektion mindestens binärer Signale zu bewirken und bei denen für jedes Paar die Gesamtheit der Signalstellungen des Detektors relativ zum Auslöser, in denen am Detektor ein Signal ausgelöst wird, durch mindestens eine nichttriviale charakteristische Gleichung beschreibbar ist, mit folgenden Verfahrensschritten:

a. an jedem Auslöser-Detektor Paar wird eine Näherungsserie $N$ von endlich vielen in der Nähe von Signalstellungen gelegenen Näherungsstellungen durch ein Meßablaufprogramm so gewählt, daß folgende Kriterien möglichst weit übererfüllt sind:

$$D_G(N) > D_G(A_I) / 15,$$

wobei
der Abstand auf einer Geraden $G$ zwischen zwei benachbarten Punkten der Projektion der Näherungsserie $N$ auf $G$ höchstens $D_G(N)$ /4 beträgt,
wobei bedeuten
$D_G$ eine Funktion, die einer beliebigen Untermenge von $A_I$ die Distanz zwischen den beiden am weitesten voneinander entfernten Punkten der Projektion der Untermenge auf $G$ zuordnet,

$A_I$ : der sich aufgrund elementarer kinematischer Berechnungen aus dem bekannten toleranzbehafteten Mechanismenmodell ergebende Raum aller erreichbaren Effektorstellungen dieses Mechanismus und
$G$ : eine beliebige Gerade, die mindestens zwei Punkte von $S_I$ enthält,
$S_I$ : Untermenge von $A_I$, die als Raum der Näherungsstellungen bezeichnete Gesamtheit aller Effektorobjektstellungen, in denen auf Basis der Parameterwerte

- des bekannten toleranzbehafteten Mechanismenmodells,
- der geschätzten Stellung des Referenzobjekts im Raum sowie
- der geschätzten Stellung des Effektorobjekts am Mechanismus rechnerisch ein Signal erwartet würde,

b. für alle Näherungsstellungen werden nacheinander durch Bewegung des Effektorobjekts bzw. Mechanismus mit einer einfachen Suchalgorithmus je eine nahegelegene Signalstellung gesucht,

c. nach Detektion wird die momentane Gelenkkonfiguration des Mechanismus an das Computersystem weitergeleitet und als Datensatz gespeichert,

d. sodann wird ein Parameteridentifikationsprogramm mittels für sich bekannter Methoden der Ausgleichsrechnung aus allen gespeicherten Datensätzen sowie den zugehörigen charakteristischen Gleichungen die die Stellungsgenauigkeit des Mechanismus beeinflussenden Parameter oder benutzerspezifizierte Teile dieser Parametermenge in ihrer wahren Größe bestimmt,

wobei zur Bestimmung der Längenparameter ein ermittelter Skalierungsfaktor eingeht.

2. Verfahren nach Punkt 1, dadurch gekennzeichnet, daß der Skalierungsfaktor bestimmt wird, indem alternativ

a) das Effektorobjekt zunächst in zwei mindestens einelementige Stellungsmengen A und B gebracht wird, wobei Informationen über den Abstand zwischen den Stellungen von A zu denen von B bekannt sind, oder

b) mindestens drei als Referenz- und Effektorobjekte ausgebildete Kalibrationsobjekte verwendet werden, indem mindestens ein Effektorobjekt in Signalstellungen zu zwei Referenzobjekten mit bekannter relativer Stellung zueinander gebracht werden, oder mindestens zwei Effektorobjekte mit bekannter relativer Stellung zueinander in Signalstellungen zu mindestens einem Referenzobjekt gebracht werden,

wobei der Abstand zwischen den Stellungen der Mengen A und B bzw. den Kalibrationsobjekten zwecks Fehlerdämpfung größer als 1/6 des Arbeitsraumdurchmessers $\Delta$, vorzugsweise ¾ $\Delta$ beträgt, wobei der Arbeitsraumdurchmesser durch das Maximum von $D_G(A_l)$ über alle Geraden $G$ bestimmt ist und bei der Abstandsbestimmung eine Mitteilung durchgeführt wird.

3. Verfahren nach einem der vorhergehenden Punkte, dadurch gekennzeichnet, daß Effektorobjekt oder Referenzobjekt in identischer Funktionsweise doppelt angeordnet sind.

4. Verfahren nach einem der vorhergehenden Punkte, dadurch gekennzeichnet, daß zur Ermittlung des Skalierungsfaktors bei Verwendung von langgestreckten Kalibrationsobjekten, die nicht exakt parallel zueinander sind, zunächst der Abstand zwischen zwei beliebigen Punkten an den Kalibrationsobjekten vermessen wird, wobei die Orientierung der Kalibrationsobjekte aufgrund vorangegangener Kalibrierung bekannt ist, je eine Signalstellung an den Kalibrationsobjekten gewählt wird und die Abstände zwischen den Punkten einerseits, sowie den Signalstellungen andererseits mit einem Meßinstrument vermessen und der Meßwert dem Computersystem zugeführt wird und sodann das Computersystem hieraus die geometrischen Beziehungen zwischen den Kalibrationsobjekten und den Skalierungsfaktor berechnet.

5. Verfahren nach einem der vorhergehenden Punkte, dadurch gekennzeichnet, daß der Skalierungsfaktor nur bei der ersten Kalibration exakt bestimmt wird und der Skalierungsfaktor anlässlich einer Nachkalibration aus dem Vergleich bekannter, auswählbarer Längen des Mechanismus ermittelt wird, die im üblichen industriellen Gebrauch unveränderlich bleiben.

6. Verfahren nach einem der vorhergehenden Punkte, insbesondere zur vollständigen oder partiellen Nachkalibrierung der Mechanismen, dadurch gekennzeichnet, daß die Kalibrationsobjekte so gestaltet oder angeordnet werden, daß während der Ausführung beliebiger Bewegungen die Effektorobjekte möglichst oft in Signalstellungen bezüglich der vorhandenen Referenzobjekte geraten.

7. Verfahren nach einem der vorhergehenden Punkte, dadurch gekennzeichnet, daß nur Teilmechanismen kalibriert werden, indem vom Mechanismus für einen der verschiedenen, physisch zusammenhängenden Teilmechanismen die Verfahrensschritte a. - d. vollzogen werden, wobei nur die Gelenke des betreffenden Teilmechanismus bewegt und die übrigen Teilmechanismen als starre Körper definiert werden.

8. Verfahren nach einem der vorhergehenden Punkte, dadurch gekennzeichnet, daß der Einfluß von Schwellwerten der Signaldetektoren, Asymmetrie in Meßanordnung, Bremswegen der Gelenke auf die dem Computersystem gemeldeten Gelenkkonfiguration und sonstigen Signalverzögerungen eliminiert wird, indem zu jeder Signalstellung eine systematische Meßsequenz aufgenommen wird, die aus Annäherung und Durchquerung der Signalstellung auf ausgewählten Bahnen besteht, wobei möglichst nur einzelne Achsen des Mechanismus bewegt werden und das Computersystem durch elementare arithmetische Verknüpfung bzw. Mitteilung aus Detektorreaktionen sowie zugehörigen Gelenkkonfigurationen einen Datensatz bildet.

9. Verfahren nach einem der vorhergehenden Punkte und zur weiteren Verbesserung der Stellungsgenauigkeit, dadurch gekennzeichnet, daß die nach der Kalibration verbleibenden Restfehler bei der Ansteuerung von Zielstellungen mittels präziser Vermessung erfaßt und die erfaßten Werte an ein lernfähiges oder adaptives System nach Art eines künstlichen neuronalen Netzes oder ein auf scharfen oder unscharfen Regeln basierender Regelinterpreter zum Training geleitet wird, woraufhin das System im normalen Betrieb die Effektorstellung korrigiert.

10. Verfahren nach einem der vorhergehenden Punkte, dadurch gekennzeichnet, daß zusätzlich zu den aus Verfahrensschritt c. gewonnenen Datensätzen, weitere Datensätze von geeigneten Sensoren zur Messung der Größen Verbiegung, Verdrehung , Temperatur und/oder weiterer Gelenkeigenschaften an das Computersystem geleitet und in Verfahrensschritt d. direkt oder bei einer Nachkalibration ausgewertet werden.

11. Verfahren nach einem der vorhergehenden Punkte, dadurch gekennzeichnet, daß wahlweise die Funktion eines Kalibrationsobjektes als Referenz- oder Effektorobjekt angewendet wird, wobei als vertauschbare Paare von Referenzobjekt-/Effektorobjekt vorzugsweise Verwendung finden:

i) Signaldetektor und geradenförmige elektromagnetische Welle /zylindrischer Unterbrecherstab;

ii) Signaldetektor und elektrisch leitender Draht / Kontaktstab;

iii) Laserstrahl / lichtempfindliche Matrixfläche;

iv) elektrisch leitfähige Ebene / leitfähiger Kontaktstab;

v) mehrachsig aufgehängte Führung mit Kontaktschwelle/ mehrachsig aufgehängter, geführter Stab;

vi) Punkt-, linien- oder ebenförmiger Signaldetektor/ Ebene elektromagnetischer Wellen.

vii) Keilförmige elektromagnetische Welle / mehrere Signaldetektoren

12. Verfahren nach einem der vorhergehenden Punkte, dadurch gekennzeichnet, daß mindestens ein Kalibrationsobjekt in den zu kalibrierenden Mechanismus integriert ist oder Kalibrationsobjekte mindestens in Teilobjekten vom Mechanismus automatisch aufgenommen, fest verbunden und nach Gebrauch wieder abgelegt werden.

13. Verfahren nach einem der vorhergehenden Punkte, dadurch gekennzeichnet, daß die Suche einer Signalstellung des Paares aus Signalauslöser und Signaldetektor durch Verwendung höher dimensionaler Sensorflächen an Stelle von Detektoren für binäre Signale beschleunigt wird.

14. Anwendung des Verfahrens nach den Punkten 1 und 2 mit mindestens zwei Referenzobjekten in bekannter relativer Stellung zueinander zur präzisen Vermessung der örtlich und / oder zeitlich unterschiedlichen, relativen Stellung mehrerer Mechanismen zueinander, indem mittels der wahren Größen im Computersystem zunächst die Stellung der Mechanismen zu den Referenzobjekten und daraus die Stellungen der Mechanismen ermittelt werden.

15. Anwendung des Verfahrens nach den Punkten 1 und 2 mit mindestens 2 Referenzobjekten in bekannter relativer Stellung zur präzisen Vermessung der absoluten Stellung eines Mechanismus in bezug auf ein beliebiges Koordinatensystem, dessen Stellungen zumindest einem der Referenzobjekte bekannt ist, indem mittels der wahren Größen im Computersytem zunächst die Stellung des Mechanismus zu den Referenzobjekten und daraus die Stellung des Mechanismus zum Koordinatensystem ermittelt wird.

16. Anwendung des Verfahrens nach den Punkten 1 und 2, insbesondere zur Vermessung der Stellung von Objekten relativ zum Mechanismus und/oder der Objekte untereinander, dadurch gekennzeichnet, daß beliebige Objekte im Arbeitsraum mit Referenzobjekten in bekanntem Abstand zueinander ausgestattet werden und dann durch Bewegung eines Effektorobjektes, vorzugsweise mittels Bewegung nur einer Achse des Mechanismus, nacheinander Signalstellungen ermittelt und daraus die relative Stellung des Mechanismus und der Objekte zueinander mittels des Computersystems berechnet werden.

17. Vorrichtung zur Verbesserung der Stellungsgenauigkeit von Mechanismen und zur Vermessung von Objekten in einem Arbeitsraum, insbesondere zur Durchführung eines Verfahrens nach einem der Punkte 1 -16, umfassend

- mindestens einen in mindestens einer Achse bewegbaren Mechanismus, der über einen Effektor nach Art einer Roboterhand oder eines Werkzeuges verfügt,
- mindestens ein Paar von Einrichtungen, ausgebildet als oder geeignet zur Generierung von Effektor- oder Referenzobjekten in Form eines geometrisch regelmäßigen Körpers als Kalibrationsobjekte, wobei

mindestens eine Effektorobjekt-Einrichtung exzentrisch zu den Achsen des Mechanismus starr mit dem Effektor verbunden ist, und

mindestens eine Referenzobjekt-Einrichtung, relativ zum Mechanismus stationär im oder am Arbeitsraum angeordnet ist, und jedes Paar von Einrichtungen über Elemente zur Auslösung und Detektion von binären Signalen verfügt,

- eine Einrichtung zur Ermittlung eines Skalierungsfaktors und
- ein Computersystem mit einem Meßablauf-, einem Parameteridentifizierungs- und einem Mechanismussteuerungs-Programm,

18. Vorrichtung nach Punkt 17, dadurch gekennzeichnet, daß der Mechanismus als steuerbares Gerät nach Art eines Tripod, Hexapod, mehrachsigen Roboters, Fahrzeuges, Handhabungsgerätes oder Kombinationen davon ausgebildet ist.

19. Vorrichtung nach Punkt 17 oder 18, dadurch gekennzeichnet, daß die Effektorobjekt- und / oder Referenzobjekt-Einrichtung ausgewählt wird aus einer Gruppe umfassend

CCD-Matrix-Kamera, Kamera mit in den Strahlengang plazierbarem Diffusor, Laser- oder Maser-Strahlungsquelle mit Photodetektor, Lichtsensor, Positionsempfindlicher Detektor (PSD: Position sensing device), Lichtschrankeneinrichtung, elektrisch leitfähiger Kontaktstab oder langgestreckter Draht, Lichtebenen oder Lichtkeile erzeugende dauerhaft oder periodisch aktivierbare Strahlungsquelle mit Spiegeln oder Linsen, zweidimensionales Sensorfeld aus punktförmigen Lichtdetektoren, Festkörper mit geometrisch regelmäßiger Gestalt oder nach Art eines Zwei- oder Dreibeines ausgebildet, mit exakt zylindrischen Stäben,

jeweils einzeln oder in Kombination von Einrichtungsteilen.

20. Vorrichtung nach einem der vorhergehenden Punkte, dadurch gekennzeichnet, daß die Effektorobjekt-Einrichtung Teil des Mechanismus ist oder von diesem mindestens in Teilen aufnehmbar gestaltet ist.

21. Vorrichtung nach Punkt 17 oder 18, dadurch gekennzeichnet, daß die Referenzobjekt-Einrichtung umfaßt,

- einen in einigen Längenabmessungen bekannten großen Behälter mit zugänglicher Oberfläche einer darin enthaltenen leitfähigen oder nicht leitfähigen Flüssigkeit oder

- eine in einigen Längenabmessungen bekannte große Platte mit abtastbaren Kanten.

Das erfindungsgemäße Verfahren soll nun eingehend erläutert werden. *Dabei werden die einzelnen Einrichtungen und Vorrichtungen bzw. Verfahrensschritte und Begriffe in deren Wirkzusammenhang erläutert, weil dies verständlicher ist* als *eine summarische abstrakte Erläuterung.*

In der schematischen Zeichnung zur Erläuterung des Verfahrens und der Vorrichtung zeigen:

Fig. 1: Bestimmung des Skalierungsfaktors mit einem Längennormal bekannter Länge

Fig. 2: Beispiel für die Bestimmung des Skalierungsfaktors mit zwei Referenzobjekten bekannten Abstandes

Fig. 3: Beispiel für die Skalarfaktorbestimmung mittels Doppel-Effektorobjekt

Fig. 4: Verformung eines Balkens bei Einwirkung einer seitwärts gerichteten Kraft

Fig. 5: Stellungsgenauigkeit bei nicht parallelem Kalibrationsobjekt

Fig. 6: Beispiel für die Anordnung des Effektorobjektes und eines immateriellen Referenzobjektes für die nebenläufige Kalibrierung

Fig. 7: Mögliche Bewegungstrajektorien des Unterbrecherstabs

Fig. 8: Zur Defintion des Residuums und zur Abweichung von Soll- und Iststellung gegenüber dem Referenzobjektes

Fig. 9: Struktur einer Gelenkwertsteuerung mit einem neuronalen Netz zur Kompensation von Kalibrationsfehlern

Fig. 10: Laser und Photodetektor als Referenzobjekt

Fig. 11: Ausführungsbeispiel mit Laser und Matrix-Kamera, wahlweise vertauschbar als Effektor- oder Referenzobjekt

Fig. 12: Ausführungsbeispiel mit Platte als Referenzobjekt und elektrisch leitendem Stab als Effektorobjekt

Fig. 13: Ausführungsbeispiel mit einer Flüssigkeitsoberfläche im Bottich als Referenzobjekt

Fig. 14: Ausführungsbeispiel mit Teleskopsystem

Fig. 15: Ausführungsbeispiel mit den Kalibrationsobjekten Lichtebene und Sammellinse

Fig. 16: Prinzip des Verfahrens mit den Kalibrationsobjekten Lichtebene /Strahlungsebene und zwei punktförmigen Sensoren / Photodetektoren

Fig. 17: Ausführungsbeispiel mit Anordnung von Lichtkeil und Photosensoren als Kalibrationsobjekte

Fig. 18: Ausführungsbeispiel für die Aufnahme des Effektorobjektes mit automatischem Ergreifen durch den Effektor des Mechanismus

Fig. 19: Referenzobjekt als Teil des Mechanismus, immateriell links und materiell rechts

Fig. 20: Mechanismus als Teil einer Arbeitszelle und

Fig. 21: Bestimmung der Stellung eines autonomen Mechanismus / Fahrzeugs mit einem einfachen Mechanismus und vielen im Raum verteilten Detektoren

Fig. 22: Vermessung der Stellung eines Werkstücks

Fig. 23: Interpolation einer Stellung

Fig. 24: Signalraum mit Rotationsachsen, und rotatorischen und translatorischen Bewegungsrichtungen in einer Signalstellung

Fig. 25: Dreibein als Effektorobjekt zur Bestimmung der Position des Effektors

Im folgenden werden kapitelweise Begriffe und erfinderische Merkmale erläutert.

Stellung, Arbeitsraum und Dimension des Arbeitsraums:

*Stellungen* eines beliebigen Objekts oder Koordinatensystems setzen sich zusammen aus einer Spezifikation der Position sowie der Orientierung bezüglich eines Bezugskoordinatensystems. Der Arbeitsraum ist der Raum der Effektor-Stellungen, die die als Effektor bezeichnete Hand oder Greifer des spezifischen, vorgegebenen Mechanismus einnehmen kann. Bei üblichen Industrierobotern kann die Position des Effektors in allen drei Dimensionen des Anschauungsraums variiert werden. Darüber hinaus kann seine Orientierung üblicherweise durch Drehung um zwei oder drei Achsen verändert werden. Die Dimension des Arbeitsraums ist anschaulich definiert (genau: gemäß linearer Algebra bzw. algebraischer Geometrie), bei üblichen Industrierobotern ist sie gleich 6, gelegentlich 5.

Gelenkkonfiguration des Mechanismus:

Ein vollständiger Satz von Gelenkstellwerten des Mechanismus, wobei im Fall eines Rotationsgelenks der Stellwert aus dem Drehwinkel besteht und im Fall eines Schubgelenks aus einer Vorschublänge. Die Gelenkkonfiguration eines üblichen Industrieroboters mit 6 Rotationsgelenken besteht also aus 6 Drehwinkeln. Jede Gelenkkonfiguration legt eindeutig die Handstellung des Roboters fest.

Die folgenden *neuen Begriffsdefinitionen* unterstützen die Formulierung des Erfindungsgegenstands:

Signalstellung, Signalkonfiguration, Signalraum

Eine Signalstellung ist eine Stellung des Effektorobjekt relativ zum Referenzobjekt, in der ein Signal am Detektor ausgelöst wird. Eine Signalkonfiguration ist eine Gelenkkonfiguration einer Signalstellung. Der Raum (genauer: die algebraische *Varietät)* aller ein Signal auslösenden Stellungen des fest an einen spezifischen, vorgegebenen Mechanismus montierten Effektorobjekts ist der Signalraum. Hierbei wird von allen äußerlichen Hindernissen, wechselseitigen körperlichen Durchdringungen der beteiligten Objekte oder graduellen Beschränkungen der Detektoren bzw. signalauslösenden Vorrichtungen (z.B. davon, daß ein Photodetektor nur eine beschränkte Apertur besitzt) abstrahiert. Kontextabhängig wird gelegentlich auch vom Mechanismus abstrahiert oder es werden die Beschränkungen der Detektoren und Auslöser einbezogen. Im letzteren Fall hängt der Signalraum von den Abmessungen der Kalibrationsobjekte ab.

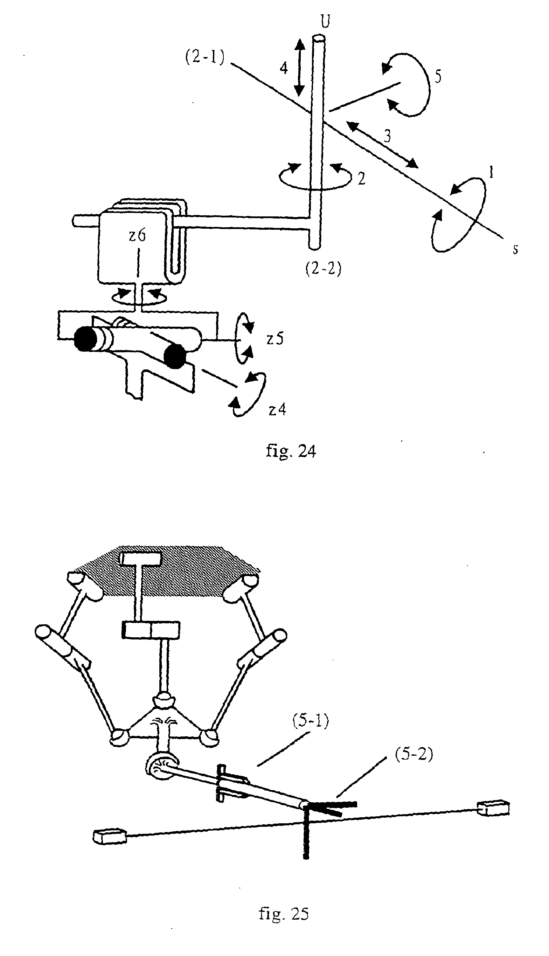

Fig. 24 erläutert den Signalraum. Er wird von den eingezeichneten unabhängigen Translationen entlang der Achse des Effektorobjekt 2-2 (die wie der entsprechende Richtungsvektor mit u bezeichnet wurde) und der Achse s des Referenzobjekts 2-1 (in der Figur mit 4 und 3 bezeichnet) aufgespannt sowie von Rotationen um diese beiden Achsen (2 und 1 im Bild) und schließlich von Rotationen um die gemeinsame Senkrechte uxs (in der Figur mit 5 bezeichnet). Sind alle Meßstellungen hinsichtlich einer dieser Dimensionen annähernd konstant, beispielsweise hinsichtlich von Rotationen um uxs, d.h. wird für alle Meßstellungen der Serie der Winkel zwischen beiden Kalibrationsobjekt-Achsen annähernd gleich einem konstanten Wert u·s=const gehalten, so wird die Parameteridentifikation im allgemeinen versagen.

Meßstellungen, Meßkonfigurationen, Meßserie, Messung

Meßkonfigurationen sind diejenigen Signalkonfigurationen, die tatsächlich vom Mechanismus im Laufe einer in sich abgeschlossenen Kalibration oder Interpolation eingenommen werden und ein Signal am Detektor auslösen. Meßstellungen sind die Stellungen der Meßkonfigurationen und eine Meßserie ist die Gesamtheit aller Meßstellungen, die im Laufe einer abgeschlossenen Kalibration oder Interpolation tatsächlich vom Mechanismus angefahren werden. Der Begriff der Messung wird hier oft in dem speziellen Sinn eines abgeschlossenen Zyklus benutzt, der zwei Verfahrensschritte der ersten Lösung umfaßt, nämlich Bewegung des Effektorobjekt in eine Näherungsstellung, Suche der Signalstellung, Auslösung des Signals und Abspeicherung der zugehörigen Gelenkkonfiguration im Computersystem.

Mechanismen, Stellungsgenauigkeit

Der erfindungsgemäß vorgegebene Mechanimus besteht aus starren Gliedern, die durch Gelenke miteinander verbunden sind. Gelenke sind üblicherweise motorisch angetriebene oder passive Dreh- und Schubgelenke oder Kombinationen davon. Das erfindungsgemäße Verfahren wird primär bei typischen Industrierobotern mit 6 Gelenken oder sogenannten Tripoden und Hexapoden eingesetzt. Der Mechanismus ist mit einem Effektor ausgestattet, welcher eine gewöhnlicher Roboterhand oder ein beliebiges Werkzeug sein kann und der mit seiner Reichweite den Arbeitsraum des Mechanismus bestimmt.

Die Geometrie eines Mechanismus läßt sich durch die sogenannten kinematischen Parameter beschreiben, also z.B. durch die konstanten Längen der Armglieder. Diese Parameter sind als Denavit-Hartenberg oder Hayati-Parameter in z.B. dem Buch von Schröer, □Identifikation von Kalibrationsparametern kinematischer Ketten□, Hanser Verlag,München, DE, 1993 dargestellt, dessen Offenbarung die Erfinder hier durch Zitat in diese Beschreibung einbeziehen. Zusätzlich zu den kinematischen Parametern wird die Stellung des Effektors noch durch nicht-kinematische Parameter beeinflußt, wie z.B. die Gelenkelastizität, die Balkenelastizität und das Getriebespiel (Buch Schröer). Zusammenfassend werden beide Gruppen als Mechanismenparameter bezeichnet. Kennt man die Mechanismenparameter, so können zu einer gewünschten Zielstellung des Mechanismus die zugehörigen Gelenkkonfigurationen (Winkel und Vorschublängen) berechnet werden, die den Effektor in die gewünschte Stellung bringen. Üblicherweise sind die tatsächlichen Werte dieser Parameter aufgrund von Fertigungstoleranzen nicht genau bekannt. Die Mechanismensteuerung verwendet üblicherweise ideale (Soll-)Parameter laut Herstellerangabe. Die aufgrund der idealen Parameterwerte berechneten Effektorstellungen weichen von den gewünschten, tatsächlichen Stellungen ab. Sind bei zwei Mechanismen diese Abweichungen im Durchschnitt bei dem ersten kleiner als bei dem zweiten so sagt man, daß die Stellungsgenauigkeit des ersten größer ist als die des zweiten. Die Bestimmung der tatsächlichen Parameter eines Mechanismus zwecks Steigerung der Stellungsgenauigkeit wird als Kalibration bezeichnet.

Im Stand der Technik wird häufiger der Begriff Positionsgenauigkeit benutzt; in dieser Erfindungsbeschreibung wird dafür der Begriff Stellungsgenauigkeit gewählt, da eine Stellung durch Position und Orientierung definiert ist.

Kalibrationsobjekte

Erfindungsgemäß wirkt in dem Verfahren der Mechanismus mit mehreren Kalibrationsobjekten, davon mindestens je ein Effektorobjekt und ein Referenzobjekt, zusammen, wobei je ein Effektorobjekt und Referenzobjekt Paare von Signaldetektoren und Signalauslösern bilden. In den erfindungsgemäßen Realisierungen /Vorrichtungen wird der Begriff Objekt für die Umsetzung in Hardware benutzt, so werden u.a. die folgenden Auslöser /Detektor Paare vorgeschlagen und die Beziehung Verfahrensbegriff /Vorrichtungsbauteil angegeben:

i) Laserlichtebene, erzeugt durch Zylinderlinse / Photodetektor bzw. Zeilenkamera

z.B. Laserdiodenmodul LDA1015 der Fa. ILEE, US mit
Zylinderlinse ILEE 1:4 oder 1:1,
Zeilenkamera 703/M der Firma Vistek, DE
andere Realisierungsmöglcihkeit: periodische Bewegung des Laserstrahls oder rotierender Polygonspiegel

ii) Laserstrahl / Photodetektor bzw. Matrixkamera
z.B. Laserdiodenmodul ILE-LDA1015 der Fa. ILEE, US,
Matrixkamera Ultra-Miniatur Kamera-Modul (s/w), Nr.: 11 51 93 der Fa.
Conrad, DE
Positionsempfindlicher Si-Detektor PSD 2L30 der Fa. Sitek, SE

iii) Lichtschranke / zylindrischer Unterbrecherstab
z.B. Lichtschranke YD50 der Fa. Wenglor, DE

iv) elektr. geladener Draht / leitfähiger, zylindrischer Kontaktstab

v) elektr. geladene ebene Platte oder Flüssigkeitsoberfläche / leitfähige
Kontaktspitze oder Kontaktkugel

vi) mit elektr. od. opt. Kontakt ausgestatte Schubgelenkhälfte / andere Schubgelenkhälfte, die mit einem Kontaktgeber ausgestattet ist, wobei der Kontakt bei einer bestimmten Vorschublänge des Gelenks ausgelöst wird
Welches der Kalibrationsobjekte Auslöser und welches Detektor ist, ist im allgemeinen frei gestellt. In einigen Fällen ist eine der beiden Varianten jedoch technisch unrealisierbar; z.B. kann eine mit Flüssigkeit gefüllte Wanne kaum Effektorobjekt sein. Jedes Effektorektorobjekt wird mittels eines Auslegers am Effektor montiert. Der Ausleger sorgt für eine Exzentrizität in bezug auf die Gelenkachsen des Mechanismus, da die Parameteridentifikation einzelner Mechanismenparameter andernfalls versagen kann.
Die exakte Montage-Stellung des Effektorobjektes relativ zum Effektor im Bezugs-Koordinatensystem muß nicht exakt bekannt sein, sondern braucht nur geschätzt zu werden.
Die Referenzobjekte werden stationär so im Arbeitsraum angeordnet oder montiert, daß sie vom Effektorobjekt erreichbar sind. Ihre Stellung relativ zur Basis des Mechanismus muß ebenfalls nicht präzise bekannt sein.
Als Kalibrationsparameter werden alle Parameter bezeichnet, die während der Kalibration identifiziert werden. Neben den Mechanismenparametern gehören hierzu auch diejenigen Parameter, die nach Abschluß der Kalibration nicht mehr interessieren bzw. die Stellungsgenauigkeit nicht beeinflussen.

Dies sind im allgemeinen nur die Stellungsparameter der Referenzobjekte. Ihre Stellung muß zwangsläufig zusammen mit den Mechanismenparametern identifiziert werden. Werden gewisse Parameter während einer Kalibration als bekannt vorausgesetzt und nicht identifiziert, so werden sie fallweise nicht zu den Kalibrationsparametern gezählt.

Gemäß dem grundlegenden Funktionsprinzip können die Detektoren stets aus einfachsten binären Sensoren bestehen. Zwecks Erleichterung der erläuterten Suche nach Signalstellungen bzw. des Suchalgorithmus können jedoch z. B. lichtempfindliche Zeilen oder Flächen, d. h. Felder von binären Sensoren wie Zeilenkameras oder Matrixkameras bzw. CCD-Kameras als Detektoren eingesetzt werden.

Computersystem mit Programmen

Zur erfindungsgemäßen Kalibration ist ein Computersystem erforderlich, welches neben dem Programm zur Steuerung des Mechanismus mindestens zwei Programme enthält:

- Das Meßablaufprogramm steuert die Erhebung von Meßdaten durch den Roboter.

- Das Parameteridentifikationsprogramm berechnet aus den Meßdaten mittels mathematischer Verfahren der Ausgleichsrechnung die Kalibrationsparameter.

Nach der Kalibration werden die ermittelten, exakten Mechanismenparameter zur genaueren Steuerung des Mechanismus verwendet. Sie werden zu diesem Zweck dem Mechanismus-Steuerungsprogramm übergeben, welches daraus zu erwünschten Zielstellungendes Effektors verbesserte Gelenkkonfigurationen berechnet, die die Zielstellung genauer erreichen als bisher.

Charakteristische Gleichungen

Die erfindungsgemäßen Auslöser-Detektor Paare sind dadurch charakterisiert, daß nicht in jeder beliebigen Stellung ein Signal ausgelöst wird sondern nur in spezifischen Stellungen. Zwecks Durchführung der Parameteridentifikation bzw. der Ausgleichsrechnung muß der Zusammenhang zwischen den Kalibrationsparametern und Signalkonfigurationen durch charakteristische Gleichungen beschrieben werden, in die die Form der Kalibrierungsobjekte eingeht. Abstrahiert man zunächst von den durch den Mechanismus bedingten Beschränkungen der Effektorobjekt-Stellung erhält man aus der Form der Kalibrierungsobjekte direkt die Grundform der charakteristischen Gleichung(en). Diese ergeben sich bei den oben erwähnten Realisierungen aus den folgenden einfachen geometrischen Signalbedingungen

    i) Schnitt einer Ebene im Raum mit einem Punkt

    ii) Schnitt einer Raumgeraden mit einem Punkt (zwei Gleichungen)

    iii) Schnitt zweier Raumgeraden

    iv) Schnitt zweier Raumgeraden

    v) Schnitt einer Ebene im Raum mit einem Punkt;

        Die Berührung einer Fläche durch eine Kugel kann als Schnitt einer um den Kugelradius verschobenen Ebene im Raum mit dem Kugelmittelpunkt modelliert werden, sobald eindeutig festgelegt ist, auf welcher Ebenenseite sich die Kugel befindet

    vi) Konstanter Abstand zweier Raumpunkte

Die eine Seite einer jeden Gleichung beschreibt die Stellung des Auslösers und die andere die des Detektors relativ zum Auslöser. Nun werden die Einschränkungen des konkreten Mechanismus einbezogen. Dazu werden in den Grundgleichungen die Parameter, die die Stellung des Effektorobjekts beschreiben ausgedrückt mittels Gelenkstellgrößen bzw. Gelenkvariablen der Gelenkkonfiguration sowie den nicht exakt bekannten, konstanten Mechanismenparametern, die die geometrische Struktur des Mechanismus und nichtkinematische Phänomene wie Gelenkelastizitäten modellieren. Zu den Mechanismenparametern gehört auch die Stellungbeschreibung des Effektorobjekt relativ zur Basis des Effektors. Als Resultat der Ersetzung erhält man die endgültigen charakteristischen Gleichungen. Das Referenzobjekt ist stationär im Arbeitsraum montiert, seine Stellung braucht nicht durch andere Größen ausgedrückt zu werden. Ein kompletter Satz von charakteristischen Gleichungen enthält alle zu bestimmenden Kalibrationsparameter.

Es eignen sich genau diejenigen Typen von Auslöser-Detektor Paaren für das erfindungsgemäße Verfahren, für die (einfache) charakteristische Gleichungen existieren. Eine Glühlampe und ein Photodetektor eignen sich z.B. nicht, da der Photodetektor stets Licht erhält, sobald er nicht völlig von der Lichtquelle abgewendet ist. Die erfindungsgegenständlichen formabgleichenden Kalibrationsverfahren unterschieden sich hinsichtlich der charakteristischen Gleichungen grundlegend von den herkömmlichen Kalibrationsverfahren, die mittels herkömmlichen, aufwendigen Meßverfahren arbeiten. Bei letzteren ist jede Stellung des Effektors eine potentielle Meßstellung; z. B. kann jede Effektorstellung durch ein Theodolitensystem vermessen werden. Streng mathematisch gesehen könnte man sagen, daß die zugehörigen charakteristischen Gleichungen daher bei diesen Verfahren trivial (z.B. 0 = 0) sind. Dieser entscheidende Unterschied zu herkömmlichen kann auch so ausgedrückt werden: bei den herkömmlichen gibt es so etwas nicht bzw die Gleichung ist trivial (z.B. 0=0). Verschiedene Realisierungen eines formabgleichenden Kalibrationsverfahrens sind eng verwandt, wenn die Gesamtheit ihrer charakteristischen Gleichungen äquivalent ist.

Näherungsserie

Die Aufgabe wird erfindungsgemäß dadurch gelöst, daß die am zu kalibrierenden Mechanismus angebrachten Effektorobjekte in verschiedene Signalstellungen gebracht werden.
Die Signalstellungen sind nicht exakt bekannt. Ausgehend von den toleranzbehafteten Herstellerangaben der Mechanismenparameter bzw. Schätzungen oder toleranzbehafteten Messungen aller Kalibrationsparameter kann man jedoch mittels der charakterisitschen Gleichungen Effektorstellungen berechnen, die dicht in der Nähe der Signalstellungen liegen werden. Sie werden als Näherungsstellungen bezeichnet.
Damit die Kalibration erfolgreich ist muß die Meßserie - also die Signalstellungen - gewissen Kriterien genügen. Erfindungsgemäß ist es ausreichend, die qualitativ neuen Kriterien nur für die berechenbaren Näherungsstellungen zu formulieren. Die ausgehend davon gefunden Signalstellungen werden aufgrund ihrer Nähe zu ersteren und den gewählten Grenzen eine ausreichende Qualität aufweisen um die Parameter zu berechnen. Kann keine Signalstellung gefunden werden, so wird die jeweilige Näherungsstellung in einem späteren Schritt einfach verworfen.
Das erste Kriterium erzwingt eine hinreichende Ausdehnung der Näherungsstellungen im Arbeitsraum, das zweite, weniger wichtige erzwingt eine hinreichende Verteilung bzw. verhindert ungünstige Häufungen. Zwecks Erläuterung dieser Kriterien werden ab jetzt Stellungen wie in der Robotik üblich auch als Punkte des 6-dimensionalen Arbeitsraums begriffen. Beide Kriterien basieren auf der Wahl einer beliebigen Geraden G im Arbeitsraum, die als einzige Anforderung zwei Stellungen aus $S_I$ enthalten muß, was später erläutert wird. Das Kriterium $D_G(N) > D_G(A_I) / 15$ besagt grob formuliert, daß die Ausdehnung der Näherungsserie (sowie der dicht gelgenen Signalstellungen) entlang bzw. in Richtung der Geraden G ungefähr 1/15 der Ausdehnung des Arbeitsraums in der gleichen Richtung betragen muß. Diese Aussage muß für alle Geraden gelten, insbesondere auch für die Achsen des Bezugskoordinatensystems, sofern sie mehr als eine Stellungen aus $S_I$ enthalten. Mißt die Ausdehnung des Arbeitsraums entlang der z-Achse (bzw. die Projektioon auf die z-Achse) z.B. 1500 mm, so sollen also mindestens zwei Näherungsstellungen in N existieren, deren z-Koordinaten mindestens 100 mm Differenz aufweisen.

Das zweite Kriterium, laut dem der Abstand auf einer Geraden G zwischen zwei benachbarten Punkten der Projektion der Näherungsserie N auf G höchstens $D_G(N)$ / 4 betragen soll, wird im folgenden als Verteilungskriterium bezeichnet. Es erzwingt im Beispiel, daß es zu einer beliebigen Näherungsstellung eine weitere in N geben muß, deren z-Koordinate sich höchstens um 100/4 = 25 mm von der z-Koordinate der ersteren unterscheidet.
Die Gerade G muß zwei Stellungen aus $S_I$ enthalten, weil sie sonst senkrecht auf $S_I$ stehen könnte. In letzterem Fall muß aber $D_G(N) = 0$ gelten. Dies gilt ganz analog wie die Projektioneiner Ebenen auf eine senkrecht darauf stehende Gerade einen einzigen Projektionspunkt ergibt, die Distanz zwischen den am weitesten voneinander entfernten Projektionspunkten also 0 ist.
Das erfindungsgemäße Verfahren fordert nur die Erfüllung der beiden Kriterien, macht aber keine Aussagen, wie die Näherungsserie gewählt wird. Dies kann entweder durch ein beliebiges System oder aber durch zufällige Wahl der Näherungsstellungen erfolgen.
In konkreten anwendungen ist es keineswegs nötig, die Erfüllung der beiden Kriterien minutiös zu überprüfen, also mathematisch echte Messungen anzustellen und dann die erforderlichen Berechnungen durchzuführen, d.h. eine natürliche Metrik und Skalarprodukt auf dem Arbeitsraum festzulegen und die Projektionen der Näherungsserie zu ermitteln. Die wesentliche Aussage ist vielmehr, daß dies die entscheidenden Kriterien sind, die optimiert werden müssen um qualitativ hochwertige Ergebnisse in der Praxis zu erhalten. Die Parameter- und Stellungsgenauigkeit läßt sich asymptotisch gegen ein praktisch erreichbares Maximum steigern wenn N und ggf. die Kalibrationsobjektabmessungen so gewählt werden, daß anstatt der angegebenen schlechtesten Grenzwerte möglichst die besten Grenzwerte der Kriterien angenähert werden, d. h.

$$D_G(N) \to D_G(A_I)$$

und (nachrangig)

$$D_G(\{n_i, n_j\}) \to 0$$

für benachbarte Näherungsstellungen $n_i$, $n_j$.
Die Maximierung der Kriterien ist hierbei als praktische Konstruktionsanweisung zu verstehen. Mit dem in der mathematischen Topologie grundlegenden Begriff der konvexen Hülle von N lassen sich die Kriterien sowie die Konstruktionsanweisungen klarer formulieren aber nicht quantifizieren. Der Begriff der konvexen Hülle einer Punktmenge läßt sich anschaulich verkürzt wie ein straff gespanntes Tuch, welches um die Punktmenge gehüllt ist, begreifen. Kurz gesagt sind zwecks Erreichung bester Grenzwerte der Kriterien zusätzliche Näherungsstellungen außerhalb oder innerhalb der konvexen Hülle von *N* zu wählen, je nachdem wo aktuell ⬜Lücken⬜ sind, d. h. wo Projektionen von *N* auf Geraden *G* die Kriterien noch nicht in dem Maße übererfüllen wie im Falle anderer Geraden. Die beiden Kriterien lassen sich dann so formulieren:

- Die Dimension der konvexen Hülle von *N* muß gleich der Dimension des Signalraums sein und ihr Volumen soll - hinsichtlich jeder Signalraumdimension - möglichst groß gewählt werden

- Die Näherungs- bzw. Meßserie soll relativ gleichmäßig in der konvexen Hülle verteilt sein.

Die Verletzung der Dimensionsanforderung hat im allgemeinen sogar unter sonst idealen Bedingungen - d. h. unter Ausschluß jeglicher Meßfehler und praktischer Unsauberkeiten in einer mathematischen Simulation ⬜ einen vollständigen Zusammenbruch jeglicher formabgleichenden Verfahren zur Folge. Die Berücksichtigung dieser Kriterien ist eine der zentralen Lehren des erfindungsgemäßen Verfahrens.

Die angegebenen schlechtesten Grenzwerte der Kriterien⬜ deren Quantifizierung wie erwähnt praktisch unwichtig ist - wurden für den Fall einer einzigen Näherungsserie an einem einzigen Ausleger-Detektor Paar und für die Bestimmung aller wesentlichen Kalibrationsparameter angegeben. Werden weniger Parameter bestimmt schwächen sich die Kriterien proportional zur Anzahl ab. Im Fall mehrer Näherungsserien $N_1$, $N_2$, $N_3$, ... kann im Kriterium $D_G(N) > D_G(A_l) / 15$ die Näherungsserie *N* grob durch die Vereinigung aller $N_i$ ersetzt werden. Das Verteilungskriterium muß für jedes $N_i$ erfüllt sein.

Optimierungen gemäß der Kriterien wirken sich asymptotisch aus, d. h. einfache Strategien, die sich an diesen Kriterien orientieren werden schon gute praktische Ergebnisse erzielen; aufwendige und komplizierte Verbesserungen der Strategien werden die Genauigkeit aber kaum meßbar weiter steigern.

Ohne Kenntnis der erfindungsgemäßen Kriterien wird deren Erfüllung im allgemeinen selbst bei überlegter Wahl der Näherungsserie scheitern, da der Signalraum bei den meisten naheliegenden Verfahrensrealisierungen fünfdimensional ist und folglich nicht mehr leicht überschaut werden kann. Daher wird eine Wahl der Meßserie nach anderweitigen Kriterien bzw. Algorithmen häufig die Dimensionsanforderung verletzen. In der Umgebung der angegebenen quantitativen Untergrenzen verschlechtert sich die Genauigkeit der Parameter bzw. die Stellungsgenauigkeit drastisch bzw. kollabiert die Parameteridentifikation.

Mit Kenntnis der Kriterien ist die Wahl einer geeigneten Näherungsserie stets leicht wie die obige Konstruktionsanweisung zeigt. Es gibt jedoch eine wesentliche Ausnahme: Bei einigen Realisierungen des erfindungsgemäßen Verfahrens haben die Kalibrationsobjektabmessungen Einfluß auf die Signalraumgröße. Werden diese Abmessungen in Unkenntnis der Kriterien c) und d) unzureichend gewählt, so muß daß Verfahren scheitern falls

$$D_G(S_l) < D_G(A_l) / 15$$

weil trivialerweise per definitionem $D_G(N). D_G(S_l)$. Das Verfahren garantiert in diesem Fall keineswegs einen Erfolg.

Als Beispiel kann die Realisierung (Effektor-Objekt=Unterbrecher, ReferenzObjekt=Laser-Lichtschranke) dienen. Sei angenommen, daß ein gewöhnlicher Industrieroboter mit 160 cm Arbeitsraumdurchmesser (z.B. Puma 560 der Fa. Stäubli, CH mit ausgestreckter Armlänge von 80 cm und annähernd kugelförmigem Arbeitsraum) kalibriert wird und ein Unterbrecherstab verwendet wird, der 10 cm lang ist. Steht der Roboter bzw. Effektor in einer Signalstellung und wird dann eine Gerade *G* in den Arbeitsraum gelegt, die bei gleichbleibender, konstanter Orientierung identisch mit dem Unterbrecherstab ist, so sind alle Effektorstellungen auf *G* innerhalb eines Intervalls von 10 cm Signalstellungen. Folglich erfüllt *G* die Voraussetzungen in Punkt 1 und es gilt

$$D_G(N). D_G(S_l) = 10 \text{ cm.}$$

Unter der Annahme $D_G(A_l) = 160$ cm gilt dann

$$D_G(N). D_G(S_l) < D_G(A_l) * 10 / 160$$

und somit ist Kriterium $D_G(N) > D_G(A_l) / 15$ verletzt.

Ein weiteres Beispiel sind die aus dem Stand der Technik erkennbaren Realisierungen, bei denen das Referenzobjekt eine Lichtschranke ist und das Effektorobjekt eine Kugel. Aufgrund der Abmessungen in zugehörigen Abbildungen verletzen sie das Kriterium $D_G(N) > D_G(A_l) / 15$ ebenfalls und sind daher für den praktischen Einsatz ungeeignet.

Die mangelnde Kenntnis bzw. unwissentliche Nichtbeachtung der erfindungsgemäßen Kriterien sowohl bei der Dimensionierung der Kalibrierungsobjekte als auch der Wahl der Meßserie sind ein wesentlicher Grund für die beschränkten praktischen Erfolge ähnlicher Ansätze in der Vergangenheit.

Dem Fachmann fällt es stets leicht, diejenigen Kalibrationsobjektabmessungen zu identifizieren, die Einfluß auf die Größe des Signalraums haben und festzulegen, wie diese geändert werden müssen um den Signalraum zu vergrößern und die Kriterien zu erfüllen. Im obigen Beispiel könnte man z. B. eine Länge von 20 bis 25 cm wählen bzw. in den erwähnten Verfahren den Radius der abgebildeten Kugeln vergrößern.

Suchalgorithmus und Signalstellungen

Da die Abmessungen des gegebenen Mechanismus unbekannt sind, ist es nicht möglich Signalstellungen direkt und gezielt anzusteuern. Ein grundlegender Verfahrensschritt besteht darin, ausgehend von einer Näherungsstellung eine Signalstellung zu suchen. Der Suchalgorithmus legt fest, in welcher Art diese Suche durchgeführt wird und wie in Ausnahmefällen (Erreichung der Arbeitsraumgrenze, Keine Signalauslösung detektiert nach endlicher Suche, ...) verfahren wird.

Aus Gründen der Zeitökonomie wird der Suchalgorithmus stets so einfach wie möglich gestaltet. Im Grunde gibt es nur eine Variante des Suchalgorithmus:

- Ist der Suchraum 1-dimensional, so wird ein einziges (im allgemeinen das letzte) Robotergelenk durch ein in Frage kommendes, endliches Intervall bewegt bis das Signal ausgelöst wird.

- In einer 2-dimensionalen Mannigfaltigkeit einen (0-dimensionalen) Punkt zu suchen verbietet sich im vorliegenden Anwendungszusammenhang aus Effizienzgründen. Ist der Suchraum 2- oder mehr-dimensional so wird dieser Fall daher durch konstruktive Maßnahmen auf den 1-dimensionalen Fall reduziert. Deswegen wird je nach Realisierungsvariante der binäre Sensor durch ein Sensorfeld geeigneter Dimension und Ausdehnung ersetzt, so daß eine 1-dimensionale Suchbewegung des letzten Gelenks hinreichend ist.

Wird keine Signalstellung gefunden so wird die Näherungsstellung verworfen und ggf. eine neue gewählt. In der Praxis kommt es sehr selten vor, daß keine Signalstellung gefunden wird.

Ist eine Signalstellung gefunden, so wird die zugehörige Meßkonfiguration, d.h. die aktuell vom Mechanismus eingenommene Gelenkkonfiguration im Computersystem gespeichert.

Parameteridentifikation

Mit Abspeicherung aller Meßkonfigurationen wird das Meßablaufprogramm beendet und das Parameteridentifikationsprogramm wird aufgerufen.
Mit dem Begriff Parameteridentifikation wird der Algorithmus (bzw. das Computerprogramm) bezeichnet, welcher aus den Rohdaten, nämlich:

- der Gesamtheit der jeweils bei Signalauslösung abgespeicherten Gelenkkonfigurationen,

- den Schätzwerten für die Stellung des Referenzobjekts im Raum und

- den Schätzwerten für die Stellung des Effektorobjekts relativ zur Hand sowie den charakteristischen Gleichungen alle Kalibrationsparameter bestimmt.

Der mathematische Kern der Parameteridentifikation ist die Newtonschen Ausgleichsrechnung. Die Funktionsweise der mathematischen Algorithmen und ihrer Varianten sowie die schematische Bestimmung des erforderlichen Zielfunktionals aus den charakteristischen Gleichungen, etc. wird hier nicht dargestellt. In dem Buch von Schröer wird eine vollständige Einführung in dieses Teilgebiet der Mathematik gegeben.
Kurz gesagt ergibt sich nach Analyse der möglichen Werte aller Kalibrationsparameter sowie der abgespeicherten Meßkonfigurationen mittels Ausgleichsrechnung schließlich nur noch ein einziger möglicher konkreter Mechanismus sowie eine einzige in Frage kommende Referenzobjekt-Stellung, durch die die Signale in den registrierten Gelenkkonfigurationen ausgelöst worden sein können. Es ist dies der tatsächlich zur Messung verwendete. Nur für diesen Mechanismus stimmen die EffektorobjektStellungen, die sich rein rechnerisch aus den Kalibrationsparameterwerten und den abgespeicherten Meßkonfigurationen ergeben mit den Bedingungen überein, die sich aus der Form der Kalibrationsobjekte ergeben. Sei als Beispiel eine Lichtebene mit einem Photosensor abgetastet worden, so werden die sich rein rechnerisch ergebenden Meßstellungen nur bei Einsetzung der wahren Kalibrationsparameter auf einer Ebene liegen und für alle anderen Werte werden sich Meßstellungen ergeben, die auf unregelmäßig gekrümmten Flächen liegen und eben nicht mit der Form des Kalibrationsobjektes, nämlich einer Ebene, übereinstimmen. Der namengebende Abgleich mit den exakten Formen der Kalibrationsobjekte wird also während der Parameteridentifikation durchgeführt. In der Literatur (aber nicht hier) wird der Begriff der Parameteridentifikation gelgentlich als Synonym für den Begriff der Kalibration benutzt.
Zur Bestimmung der $n$ Kalibrationsparameter des Mechanismus müssen mindestens $k = n$ Messungen ausgeführt werden. Es ist jedoch zweckmäßig, zur Gewinnung fehlerdämpfender Redundanz mehr als diese auszuführen. In praktischen Anwendungen sollte $k$ mindestens dreimal so groß wie $n$, vorzugsweise 10 mal so groß sein.

Die mathematische Identifikation erfordert, daß die Meßstellung durch die Meßkonfiguration eindeutig bestimmt ist. Ist der zu kalibrierende Mechanismus keine □kinematische Kette□ (Roboter) sondern ein sogenannter mehrschleifiger Mechanismus (z.B. ein Hexapod bzw. □Flugsimulator□), so sind je nach Mechanismenklasse einige geeignete passive (d.h. nicht angetriebene) Gelenke mit □Gelenkencodern□ zur Bestimmung von Winkeln bzw. Vorschublängen auszurüsten. Üblicherweise werden die betroffen Mechanismenklassen vom Hersteller serienmäßig mit den erforderlichen Vorrichtungen geliefert.

Die so gefundenen realen Parameter des realen Mechanismus, die von den Herstellerangaben abweichen in die der ermittelte Skalierungsfaktor eingegangen ist, werden zwecks Verbesserung der Stellungsgenauigkeit bzw. präziser Steuerung in das Steuerungsprogramm des Roboters übernommen.

Es folgen weitere Details der Lösungen:

Die Notwendigkeit zur Bestimmung des Skalierungsfaktors stellt einen wesentlichen Unterschied zwischen formabgleichenden und traditionellen Kalibrationsverfahren dar. Bei letzteren ist die Bestimmung eines Skalierungsfaktors aufgrund der Verwendung herkömmlicher Präzisionsmeßinstrumente stets implizit im Kalibrationsverfahren enthalten und bedarf keiner gesonderten Berücksichtigung.

Wird in der Grundform formabgleichender Verfahren nur ein einziges Referenzund Effektorobjekt verwendet und kein Längennormal in die Kalibration einbezogen, so ist es unmöglich, einen Größenmaßstab des Mechanismus zu ermitteln. Dies geht u.a. aus der Literatur zum Stand der Technik hervor. Der Parameteridentifikationsalgorithmus kann in diesem Fall nur dann terminieren, wenn ein beliebiger Längenparameter mit einem beliebigen (Schätz-)Wert $l_i'$ belegt und festgehalten bzw. nicht identifiziert wird, da andernfalls die Minimalität des Mechanismenmodells laut Schröer verletzt ist. Als Ergebnis der so modifizierten Parameteridentifikaiton erhält man präzise die Relationen der Längenparameter des Mechanismus zueinander, aber nicht ihre absolute Größe. Dieser Fall der Parameteridentifikation soll als unskalierte (Parameter-) Identifikation bezeichnet werden. Die korrekten (Näherungs-)Werte für die Gesamtheit der Längenparameter ergeben sich nach der unskalierten Identifikation aus einer Multiplikation aller ermittelten Längenparameter $l_i'$ mit einem eindeutig definierten, gemeinsamen Faktor $s$, der als Skalierungsfaktor bezeichnet wird. Bezeichnet $l_i$ den korrekten, gesuchten Parameterwert, so gilt $l_i = s * l_i'$.

Zwecks Bestimmung des Skalierungsfaktors erfordert das erfindungsgemäße formabgleichende Verfahren keine Vermessung bestimmter Längen im traditionellen Sinne sondern führt nur einen Abgleich mit einem bekannten Längennormal durch, dessen Abmessungen geeignet zu wählen sind. Geht man von der unskalierten Identifikation aus, so sind zwei Schritte durchzuführen

i) Der Mechanismus bezieht das Längennormal in die Kalibration ein, indem er mit dem Effektorobjekt zwei oder mehrere (End-)Punkte des Längennormals anfährt, die im einfachsten Fall den bekannten Abstand $d$ aufweisen.

ii) Aus den zugehörigen Gelenkkonfigurationen ergibt sich rechnerisch auf Basis der unskalierten Parameterwerte ein Abstand, der mit $d'$ bezeichnet wird. Es muß gelten $d/d' = s = l_i/l_i'$, woraus der zuvor unbekannte Skalierungsfaktor $s$ bzw. der wahre Wert $l_i = d * l_i'/d'$ berechnet werden kann.

Aufgrund der Natur des beanspruchten Verfahrens ist der mit herkömmlichen Meßverfahren gemessene Wert $d$, der im Allgemeinen einmalig bei der Herstellung des Kalibrationssystems und vor dessen praktischem Einsatz bestimmt wird, im allgemeinen mit einem Fehler $\varepsilon$ behaftet. Der Wert $\varepsilon$ ist üblicherweise unabhängig von der Größe des Längennormals. Anstelle des korrekten Werts von $l_i$ erhält man dann $(d + \varepsilon) * l_i'/d'$ und der Fehler ergibt sich zu $\varepsilon * (l_i' / d')$. Ist der Faktor $(l_i' / d')$ kleiner 1 erzielt man offensichtlich eine Fehlerdämpfung. Es gehen nicht nur die Meßfehler bei der herkömmlichen Vermessung des Längennormals in die Bestimmung der Längenparameter ein sondern ganz analog vor allem auch Fehler, die unvermeidlich während der formabgleichenden Kalibration bzw. bei der Abtastung des Längennormals auftreten. Um eine möglichst gute Fehlerdämpfung zu erhalten muß man offensichtlich nur das Längennormal $d$ bzw. das in $\varepsilon$ ($l_i' / d'$) auftretende $d'$ so groß wählen, wie es die restlichen Nebenbedingungen des Verfahrens, z.B. Erreichbarkeit der Stellung, zulassen; hieraus ergeben sich die Bedingungen im genannten Punkt. Das Gesamtverfahren funktioniert auch bei Längennormalen, die kleiner als $\Delta/6$ sind, Fehler werden dann jedoch unvorteilhaft verstärkt.

Die beiden prinzipiellen Varianten werden später zu den Ausführungsbeispielen erläutert.

Die Parameteridentifikation muß nicht zwangsläufig in einen unskalierten Teil und eine gesonderte Bestimmung des Skalierungsfaktors unterteilt werden.

Zur Verbesserung des Ergebnisses wird man in Schritt i) mehr als eine Messung auf jeder Seite des Längennormals ausführen. So erhält man zwei Serien A und B von Stellungen, die sich z. B in ihrer Orientierung unterscheiden können. Die Vergleichsgröße $d'$ wird dann per Mittelung bestimmt, was zur Fehlerdämpfung beiträgt. Handelt es sich beim Längennormal um parallele, langgestreckte Objekte so können sich die beiden Stellungsmengen z.B. auch in der Position unterscheiden. Man verwendet dann nicht die Abstände zwischen einzelnen Stellungspaaren als Vergleichsgrößen sondern erhält durch rechnerische Ermittlung der Orientierung der Objekte und anschließende Ermittlung des rechnerischen Abstandes beider Objekte die interessierende Vergleichsgröße $d'$, aus der sich mit dem bekannten $d$ der Skalierungsfaktor $s = d / d'$ ergibt.

Gemäß Stand der Technik wurden bisher nur einzelne Kalibrationsobjekte als Längennormal benutzt, z.B. zwei Seiten eines Quaders oder der Durchmesser einer Kugel, nicht aber der exakt vermessene Abstand zwischen mehreren gleichartigen Kalibrationsobjekten. Eine wichtige Lehre des Verfahrens ist die Mittelung der Vergleichsmessungen sowie die Wahl der Abmessung zwecks Fehlerdämpfung. Die Verfahren gemäß der zweiten Variante sind insofern überlegen, als keine gesonderten Vergleichsmessungen zur Ermittlung des Längennormals erforderlich sind, sondern dessen Bestimmung in den Kalibrationsprozeß integriert ist. Dabei Verfahren wird implizit jede Einzelmessung an der Bestimmung des Skalierungsfaktors beteiligt, wodurch ein maximaler Mittelungseffekt entsteht, der die Präzision des Skalierungsfaktors steigert; außerdem wird die Zahl der erforderlichen Messungen bei gleichbleibender Qualität reduziert. Maßgeblich hängt die Genauigkeit des ermittelten Skalierungsfaktors aber von der Fehlerdämpfung ab, d.h. von der absoluten Größe des verwendeten Längennormals. Ein entscheidender Vorteil der erfindungsgemäßen Vorrichtungs- und Verfahrensvarianten sowie der Verwendung von zwei gleichartigen , vorzugweise identischen, Kalibrationsobjekten ist, daß sie stets die Verwendung sehr großer Längennormale erlauben, ohne daß wichtige praktische Aspekte wie Kosten und Herstellungsaufwand des Kalibrationssystems oder Vor- und Nachbereitungsaufwand für die Kalibrierung oder die Kollisionsvermeidung davon beeinträchtigt werden.

Die Gesamtstrategie zur integrierten, effizienten und hochpräzisen Bestimmung des Skalierungsfaktors durch das Zusammenspiel der verschiedenen, aufeinander abgestimmten Vorrichtungs- und Verfahrenskomponenten ist entscheidender Erfindungsgegenstand.

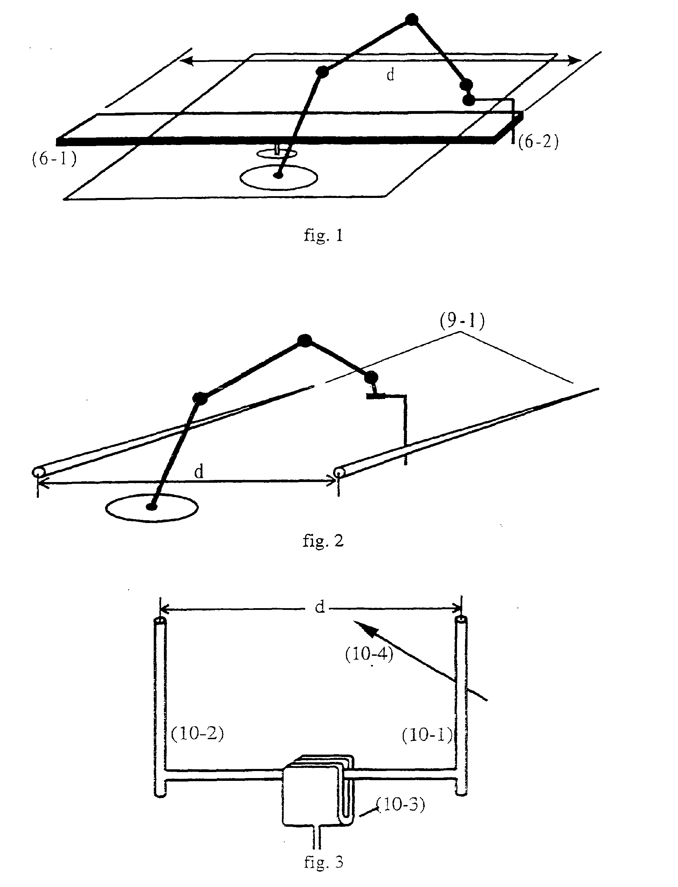

Die Verfahren zur Ermittlung des Skalierungsfaktors durch Abgleich an einem Längennormal ist in **Figur 1** veranschaulicht: Das Längennormal 6-1 ist hier ein parallel über einer Arbeitsfläche fest montierter Stab mit zwei parallelen Abschlußflächen, die senkrecht zur Arbeitsebene stehen. Der Mechanismus fährt zunächst die vordere Abschlußfläche mit dem senkrecht zur Arbeitsfläche ausgerichteten Effektorobjekt 6-2 an, d.h. durch einen binären Sensor wird Berührung festgestellt. Danach wird diese Berührung an der hinteren Abschlußfläche wiederholt. Aus den beiden Meßkonfigurationen wird mit den ermittelten Parametern des Mechanismus der Abstand $d'$ berechnet und durch Vergleich mit dem bekannten $d$ der Skalierungsfaktor bestimmt. Es ist vorteilhaft, an jedem Ende des Längennormals mehrere Meßstellungen anzufahren.

Das zur Ermittlung des Skalierungsfaktors durch Abgleich erforderliche Längennormal kann gemäß einer Variante erzeugt werden, die **Figur 2** dargestellt ist. Indem zwei parallele Referenzobjekte 9-1 so montiert werden, daß ihr Abstand d unveränderlich und bekannt ist bzw. vorab präzise vermessen wird. Die Meßreihe wird zunächst unter Verwendung des einen Referenzobjekt aufgenommen und danach mit dem anderen; alternativ können die beiden Meßreihen auch beliebig verschachtelt aufgenommen werden. Der Skalierungsfaktor ergibt sich dann in erwähnter Weise aus einer gemeinsamen Parameteridentifikation. Wichtig und sehr vorteilhaft ist, daß keine separate Meßserie zur Ermittlung des Längennormals aufgenommen werden muß.

**Figur 3** zeigt, daß das Längennormal kann auch dadurch hergestellt werden, daß zwei von einem Effektor 10-3 gehaltene Effektorobjekte mit festem, bekanntem Abstand zueinander identifiziert werden, z.B. zwei identische Unterbrecher als linker Stab10-2 und rechter Stab 10-1, deren Abstand $d$ bekannt ist. Die Detektion des Referenzobjekt 10-4 mit jedem der beiden Effektorobjekte liefert diesen Abstand, wobei die beiden Meßreihen wieder beliebig verschachtelt aufgenommen werden können. Aufgrund des Dualitätsprinzips folgt diese Methode der Skalierungsfaktorbestimmung aus dem vorigen Abschnitt und umgekehrt.

Unter zwei Voraussetzungen wird die Bestimmung des Skalierungsfaktors besonders einfach:

- Die exakten Abmessungen des Mechanismus einschließlich des Skalierungsfaktors wurden zu einem früheren Zeitpunkt mit anderen Verfahren ,üblicherweise direkt nach der Herstellung vom Hersteller mit einem herkömmlichen Präzisionsmeßverfahren oder einer der vorstehenden Methoden, ermittelt und die Abmessungen sind bekannt;

- Seit der letzten exakten Kalibration unterlag die Mehrzahl der Glieder des Mechanismus nur kleineren Verformungen.

Ist dies erfüllt, läßt sich der Skalierungsfaktor nach einer formabgleichenden Kalibration und unskalierten Identifikation ohne zusätzliche Messungen bestimmen. Die Ermittlung des Skalierungsfaktors basiert auf der Beobachtung, daß unter geringen Verformungen im üblichen industriellen Gebrauch - Abnutzung bis hin zu leichten Kollisionen - gewisse Abmessungen bzw. Längenverhältnisse schwer deformierbarer Körper invariant bleiben.

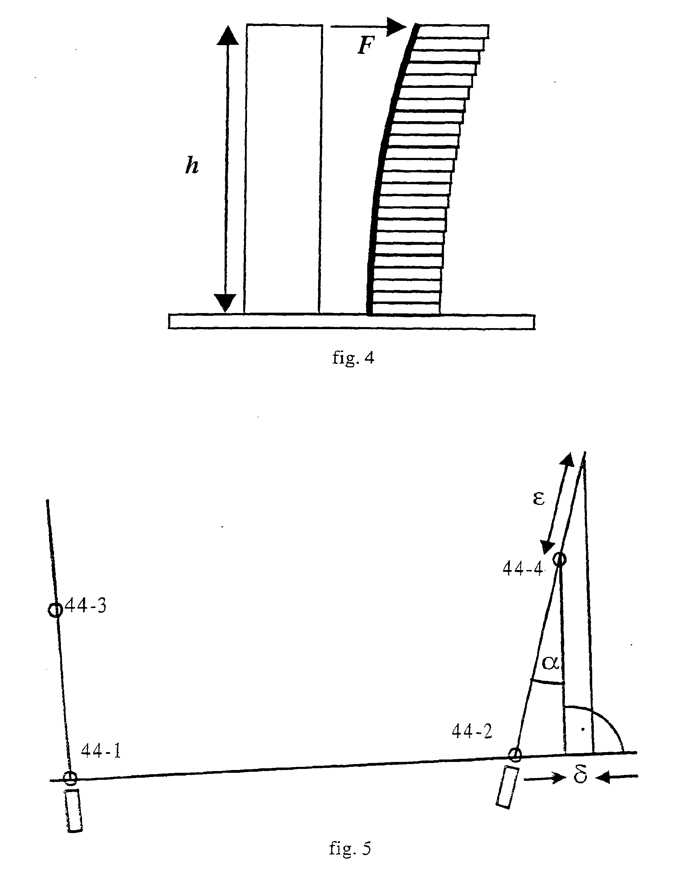

Fig. 4 stellt z.B. schematisch eine geringe Verformung eines einseitig arretierten Metallstabes, etwa Roboterarmsegmentes, unter Einwirkung einer Kraft $F$ dar. Es zeigt sich im Experiment, daß die Höhe $h$ dabei weitgehend unverändert bleibt, da die Verformung als Parallelverschiebung kleiner Körpersegmente in Richtung der Kraft interpretiert werden kann (rechter Figurenteil: □Bernoulli Hypothese□). Erfindungsgemäß läßt sich dies wie folgt nutzen:

1) Die jeweiligen Konstanten für die verschiedenen starren Glieder des Mechanismus, welche aus unterschiedlichen Materialien unterschiedlich aufgebaut sein und eine unterschiedliche Verformbarkeit besitzen können,werden ausgehend von der Bernoulli-Hypothese mittels Praxistests gewonnen.

2) Der Mechanismus wird vor Inbetriebnahme exakt kalibriert und die Ergebnisse werden z.B. in der Steuerung oder auf Diskette als Sollwerte abgespeichert.

Diese beiden ersten Maßnahmen werden üblicherweise vom Hersteller des Mechanismus durchgeführt. Beim Anwender sind dann folgende Punkte auszuführen:

3) Nach der unskalierten Kalibration werden die jeweiligen Konstanten der einzelnen Glieder vom Kalibrationsprogramm berechnet und mit den abgespeicherten Sollwerten verglichen. Im Normalfall sind alle Verhältnisse von Soll- zu Istwerten beliebiger Gliedlängen identisch und liefern direkt den gemeinsamen Skalierungsfaktor aller Glieder bzw. des Gesamtmechanismus $l_1 / l_1' = l_2 / l_2' = l_3 / l_3' = ... = s$.

4) Besitzt der Mechanismus mehr als ein Glied, dessen Sollabmessungen bekannt sind - die identifizierte Stellung des Referenzobjektjes zählt nicht zu den bekannten Sollabmessungen -, so läßt sich auch der Sonderfall einer stärkeren, nicht-kompensierbaren Verformung erkennen und korrigieren. Von einer stärkeren Verformung wird im allgemeinen nur ein einzelnes Glied oder wenige Glieder betroffen sein (Kollision), kaum aber alle Glieder gleichmäßig. Berechnet man daher die individuellen Skalierungsfaktoren $l_i / l_i'$ zu allen Gliedern einzeln, so werden diese nach obiger Voraussetzung für die Mehrzahl der Glieder übereinstimmen - dieser gemeinsame Wert ist dann der Skalierungsfaktor des Mechanismus. Davon abweichende Skalierungsfaktoren einzelner Glieder deuten auf starke Verformungen des betreffenden Gliedes hin. Um die korrekten Abmessungen der stark verformten Glieder zu erhalten, können die aus der unskalierten Identifikation erhaltenen Längen des Gliedes in gewöhnlicher Weise mit dem zuvor ermittelten Skalierungsfaktor des Mechanismus multipliziert werden.

Es kommt vor, daß zwei Referenzobjekte zwecks Skalierungsfaktorbestimmung idealerweise parallel sein sollten aber nicht parallel sind. Dies wird erläutert am Beispiel von zwei Laserstrahlen gemäß **Fig. 5**, die nicht exakt parallel sind. Das Beispiel läßt sich direkt auf andere Kalibrationsobjekte, z. B. fast parallele Ebenen , übertragen.

Zwecks Bestimmung der wirklichen Längen muß ein Skalierungsfaktor in die Kalibration eingehen bzw. müssen die Längenparameter nach Abschluß der unskalierten Parameteridentifikation mit einem solchen multipliziert werden. Der Skalierungsfaktor stellt einen Zusammenhang zwischen dem in der unskalierten Identifikation bestimmten, unskalierten Modell des Mechanismus, im Rechner repräsentiert durch die unskalierten Kalibrationsparameter, und der Realität her.

Bei exakt parallelen Geraden, z.B.Laserstrahlen, ist es leicht, diesen Zusammenhang herzustellen: der Abstand ist eindeutig definiert und kann relativ leicht vermessen werden, es ist nur darauf zu achten, daß entlang einer kürzesten Strecke Maß genommen wird und nicht entlang einer diagonalen Verbindungslinie. Sind die Strahlen jedoch windschief, so ist die Vermessung weitaus schwieriger. Elementar-mathematische Konzepte wie der Normalenabstand lassen sich in der Praxis nicht anwenden.

Der Zusammenhang zwischen Modell und Realität kann hergestellt werden, indem zwei Punkte auf den Kalibrationsobjekten, deren exakte Lage auch im Modell bekannt ist, exakt in der Realität vermessen werden und das Ergebnis ins Modell übertragen wird. Die einzigen Punkte, deren exakte Lage sowohl im Modell als auch der Realität bekannt sind, sind die Signalstellungen. Zwecks industrieller Anwendung sind jedoch die Nebenbedingungen zu vergegenwärtigen: Die exakte Vermessung soll möglichst bei Herstellung des Kalibrationssystems stattfinden, nachdem die beiden Kalibrationsobjekte bzw. ihre Generatoren auf einem gemeinsamen Träger unveränderlich und möglichst parallel montiert wurden. Der Skalierungsfaktor soll aber periodisch vor Ort beim Käufer/Anwender bestimmt werden. Die Signalstellungen können daher nicht unmittelbar den benötigten Zusammenhang liefern, da sie sich von Roboter zu Roboter unterscheiden.

Das erfindungsgemäße Verfahren zeichnet sich durch Berücksichtigung der praktischen Nebenbedingungen, geringen Meßaufwand und vor allem maximale Fehlerdämpfung aus.

Das praktische Vorgehen zeigt **Figur 5:**

- Nach Fertigung des Kalibrationssystems wird die Entfernung zwischen zwei beliebigen, leicht wieder auffindbaren Punkten auf den Strahlen , z.B. die Punkte 44-1 und 44-2 an denen die Laserstrahlen aus dem Laser-Träger austreten - exakt mit konventionellen Präzisionsmeßsystemen vermessen.

- Zwecks periodischer Kalibration beim Käufer / Anwender vor Ort wird zunächst die unskalierte Identifikation durchgeführt, wodurch die Richtungs(einheits)vektoren der Strahlen exakt im mathematischen Modell bekannt sind. Danach werden zwei Signalstellungen 44-3 und 44-4 auf den Strahlen gewählt.

- Der Bediener muß die Abstände zwischen 44-1 und 44-3 sowie 44-2 und 44-4 mit einem einfachen Meßinstrument z.B. einem Zollstock, toleranzbehaftet vermessen und die beiden Meßwerte in das Computersystem eingegeben. Dieses multipliziert die Richtungs(einheits)vektoren mit den vom Bediener ermittelten Abständen und addiert die resultierenden Vektoren zu den Signalstellungspunkten. So erhält man genau die Position der Punkte 44-1 und 44-2 im mathematischen Modell und kann daraus den Abstand im Modell berechnen.

- Hieraus ergibt sich durch Berechnung des Punktabstandes ein Wert $d'$ und der Skalierungsfaktor ergibt sich mit dem bekannten, wahren Abstand $d$ zu $s = d/d'$.

Als Zahlenbeispiel sei der nach Herstellung und Montage der Laser im Laserträger exakt gemessene Abstand zwischen 44-1 und 44-2 genau $d$ = 1000 mm. Angenommen, es ergibt sich ein rechnerischer Abstand von $d'$ = 990 mm im mathematischen Modell, so ist der Skalierungsfaktor gleich 1000/990. Mit diesem Wert sind alle identifizierten Längenparameter des Mechanismus zu multiplizieren.

Entscheidend beim erfindungsgemäßen Vorgehen ist die Fehlerdämpfung: Macht der Bediener vor Ort beim vermessen der Strecke 44-2 zu 44-4 einen Fehler von $\varepsilon$, so wird der eingezeichnete Fehler $\delta$ in den Skalierungsfaktor eingehen. Ist $\alpha$ die Abweichung vom Lot auf die Verbindungsgerade 44-1 und 44-2, so gilt $\delta$= $\tan(\alpha) * \varepsilon$. Da $\alpha$ ungefähr 0 ist wird $\tan(\alpha)$ auch dicht bei 0 liegen. $\delta$ beträgt stets nur ein Bruchteil von $\varepsilon$. Das erfindungsgemäße Verfahren gewährleistet dadurch eine praktisch maximale Fehlerdämpfung.

Aus den Erläuterungen zur Skalierung ist dem Fachmann klar, daß in Weiterbildung der Erfindung der Skalierungsfaktor nur bei der ersten Kalibration exakt bestimmt werden muß und wenn der Skalierungsfaktor anlässlich einer Nachkalibration aus dem Vergleich bekannter, auswählbarer Längen des Mechanismus ermittelt wird, die im üblichen industriellen Gebrauch unveränderlich bleiben kann.

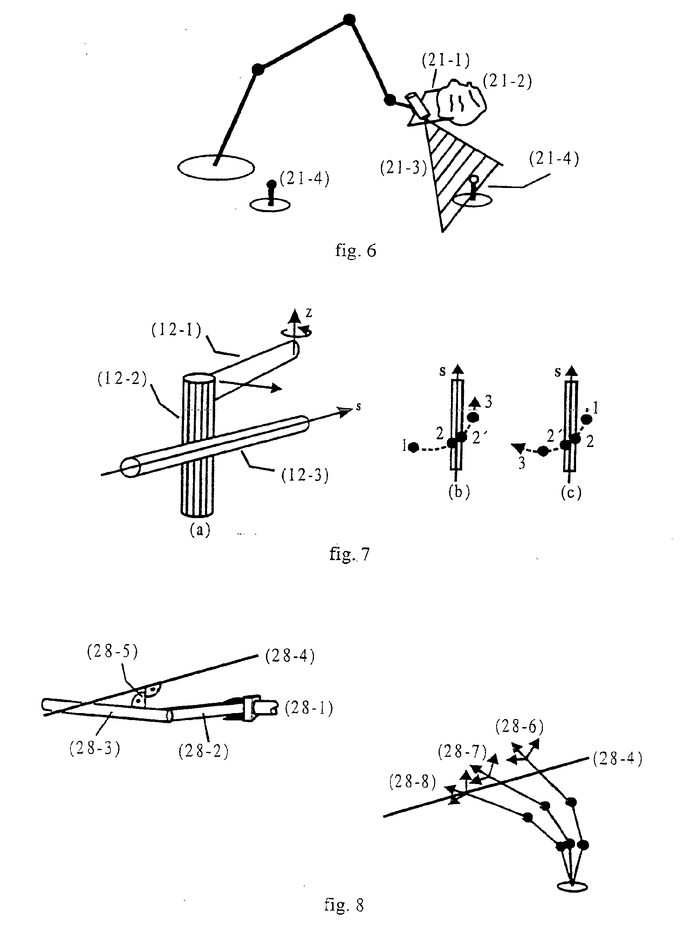

Zur Einsparung einer dem eigentlichen Arbeitsschritt vorgelagerten vollständigen Kalibrationsphase gemäß oder bei der partiellen Nachkalibrierung der Mechanismen oder für die Erkennung, daß eine Abweichung von als korrekt angenommenen Kalibrationsparametern vorliegt, ist es erfindungsgemäß möglich, die Meßserie während des Ablaufs der Arbeitsphase des Mechanismus aufzunehmen. Dies kann erreicht werden, indem die Kalibrationsobjekte so gestaltet werden, daß während der Ausführung beliebiger Bewegungen die Effektor- und Referenzobjekte möglichst oft in Signalstellungen bezüglich der vorhandenen Referenzobjekte geraten. Dazu wird der Mechanismus permanent oder vorübergehend mit einem - hier vorzugsweise immateriellen - gemäß **Figur 6** ein Effektorobjekt , z.B einer Lichtebene 21-3 ausgerüstet, das die Durchführung normaler Arbeitsschritte, z.B. Manipulation des Werkstückes 21-2 mit dem Effektor, einer Robotzange 21-1, nicht behindert und gleichzeitig die Abtastung der Referenzobjekte, eines mehrfach vorhanden punktförmigen Lichtsensors 21-4 erlaubt. Sobald während der Durchführung einer Arbeitsbewegung des Mechanismus eine Signalkonfiguration erreicht wird, werden die Werte der Gelenkvariablen aufgezeichnet und abgespeichert, ohne daß die Arbeitsbewegung in irgendeiner Weise beeinflußt wird. Wenn genügend Signale ausgelöst sind, wird die Parameteridentifikation gemäß Verfahrensschritt d durchgeführt. Es können auch zusätzliche Bewegungen des Mechanismus, etwa während ausreichend langer Arbeitspausen, veranlaßt werden, um z.B. die während des Arbeitsvorgangs aufgenommene Meßserie um solche Meßkonfigurationen zu erweitern, welche zur Erfüllung der Kriterien für Meßserien erforderlich sind.

Zur Beschleunigung der Identifikation und/ oder zur Verbesserung des Meßergebnisses können erfindungsgemäß auch Gruppen von Gelenken des Mechanismus gebildet werden, die im kinematisch-physischen Sinn zusammenhängen und die getrennt voneinander sukzessive identifiziert werden. Bei einem gewöhnlichen Roboter kann die eine Gruppe z.B. aus den Gelenken 1, 2, 3 , von der Basis aus gezählt, bestehen und die zweite aus den letzten drei Gelenken. Es werden dann der Anzahl der Gruppen entsprechend viele separate Meßserien gebildet. Beispielsweise werden zunächst die Gelenke 4, 5, und 6 festgehalten und die Gelenke 1, 2, 3 bewegt. Wird die Kette vom 4. Gelenk bis zum Effektor als ein einziger, noch zu identifizierender, starrer Körper betrachtet, so sinkt die Anzahl der zu identifizierenden Kalibrationsparameter im Vergleich zum Ausgangsroboter annähernd um die Hälfte. Alle erfindungsgemäßen Realisierungen des Kalibrationsverfahrens liefern in diesem Fall unverändert korrekte Ergebnisse. Nach der Parameteridentifikation der ersten Gruppe 1, 2 und 3 werden diese Gelenke arretiert und die Gelenke 4, 5, 6 der zweiten Gruppe auf die gleiche Weise identifiziert. Die Ergebnisse der vorangehenden Identifikation können mit diesen Ergebnissen abgeglichen werden, d.h. die Kette der Gelenke 1, 2 und 3 kann während der Identifikation der zweiten Gruppe als exakt bekannter starrer Körper betrachtet werden. Nach Identifikation der zweiten Gruppe können auch die Ergebnisse hinsichtlich der Kette 1, 2, 3 verglichen werden. Als Endergebnis erhält man alle gesuchten Kalibrationsparameter. Die Vorteile der Entkopplung sind:

- Verbesserung der Identifikationsergebnisse bei gleichzeitiger Reduktion des Meßaufwandes. Identifiziert man nacheinander z.B. zwei mal 24, nicht notwendig disjunkte, Parameter, so erfordert dies signifikant weniger Messungen und liefert weit bessere Ergebnisse, als wenn 40 Parameter simultan identifiziert werden müssen.
- Fehlerursachen können den Gruppen separat zugeordnet werden. Die Fehlerquellen lassen sich auf diese Weise besser eingrenzen.

Dieser Prozeß kann bis zur Entkopplung und separaten Vermessung eines einzigen Gelenks getrieben werden.

Zur Elimination des durch Schwellwert und Signalverzögerung entstehenden Meßfehlers wird vorteilhaft erfindungsgemäß ein einziges, angetriebenes, frei bewegliches, Gelenk des Mechanismus bewegt, bis ein Zustandswechsel des binären Signals zur Erkennung der Meßstellung detektiert wird. Die Bewegung wird fortgesetzt, bis das Signal in den Ausgangszustand zurückwechselt. Die beiden Gelenkwerte, an denen das Signal wechselt - vereinfachend ausgedrückt: "Schaltwerte" bzw. "Schaltwinkel" oder "Schaltlänge", etc, je nach Gelenktyp - werden registriert. Nun wird das Gelenk in Gegenrichtung bewegt und die Schaltwerte werden neuerlich registriert. Aus dem Mittelwert zwischen den Schaltwerten lassen sich je nach zugrundeliegender Verfahrensausprägung Rückschlüsse ziehen, die in geeigneten Fällen eine Elimination von Schwellwert- und Signalverzögerungsfehlern ermöglichen.

**Figur 7**, Teilfigur a) zeigt die Situation. Das letzte Gelenk des Mechanismus werde als rotatorisches (Drehachse z) angenommen. Zur Aufnahme des Meßpunkts wird das Effektorobjekt mit Ausleger 12-1 und Unterbrecherstab 12-2 um z gedreht; in der rechts eingezeichneten Draufsicht **b)** sind verschiedene nacheinander eingenommene Drehwinkel durch die Zahlen 1, 2, 2' und 3 bezeichnet. Der Eintritt findet hier von links statt, der Austritt nach rechts. Sobald während der Bewegung die Unterbrechung des Referenzobjekt, z.B.

Laserstrahl 12-3 detektiert wird (Stellung 2, Eintritt), wird dieser Gelenkwinkel (Schaltwinkel) aufgezeichnet. Nach Weiterbewegung wird in Stellung 2' (Austritt) detektiert, daß keine Unterbrechung mehr stattfindet. Normalerweise fallen Stellung 2 (Eintritt) und 2' nicht zusammen. Sofern Eintritt und Austritt symmetrisch bezüglich der Mittelachse s des Strahls sind, ergibt ihr Mittelwert den gewünschten Meßwinkel. Um Hysteresefehler beim Ein- und Austritt zu kompensieren, kann die Messung in einem zweiten Durchlauf mit umgekehrter Drehrichtung erfolgen, wie in **Teilfigur c)** dargestellt (Eintritt von rechts, Austritt nach links). Der gesuchte Wert - Schnitt der Mittelachsen von Laser und Unterbrecherstab - ist dann der Mittelwert der beiden Mittelwerte des ersten und zweiten Durchlaufs, also der Mittelwert aus vier Werten. Im Prinzip kann man den Effektor durch eine beliebig vorgegebene Trajektorie, z.B. eine Gerade, steuern und die beiden Signalwechsel registrieren. Dabei wird man allerdings im allgemeinen mehrere Gelenke bewegen, was den entscheidenden Nachteil hat, ungenau zu sein (Achsensynchronisationsfehler). Deshalb wird nicht irgendein Gelenk bewegt, sondern vorteilhaft nur das letzte Gelenk der Kette. Entscheidend ist, daß der Mittelwert bzw. eine hinreichend leicht errechenbare Funktion der Signalwinkel eine praktisch verwertbare Aussage macht, d.h. zu einer Gleichung führt, deren Lösung auffindbar ist und die die Meßgenauigkeit verbessert.

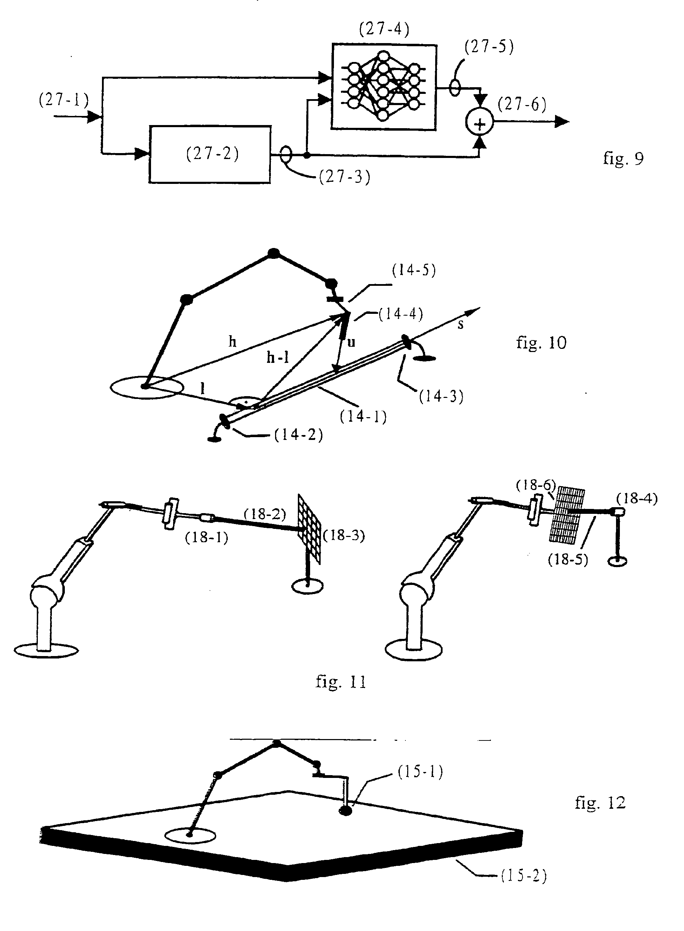

Nach der Identifikation aller Parameter gemäß dem Verfahrensschritt d können die Stellungsinformationen, die während des Ablaufs des Verfahrens gewonnen werden erfindungsgemäß zum Training eines adaptiven, lernenden Systems "LS" bzw. neuronalen Netzes benutzt werden. **Figur 8** stellt dieses Problem dar, wobei - in der linken Teilfigur - am Effektor 28-1 ein Ausleger 28-2 und der Unterbrecher 28-3 befestigt sind, die die Strahlung 28-4 unterbrechen. Das Netz lernt die Differenz 28-5 zwischen einer gewünschten Zielstellung und der davon abweichenden, wirklichen Stellung, welche sich aufgrund von immer noch toleranzbehafteten Mechanismenparameter nach einer erfindungsgemäßen Kalibration ergeben kann. Je nach Typ und Generalisierungsfähigkeit des lernenden Systems werden dabei auch Informationen über die erreichte Stellung herangezogen. Die wirkliche Stellung kann insbesondere mit diesem erfindungsgemäß noch präziseren ergänzenden Vermessungsverfahren bestimmt werden. Nach der Lernphase kann das lernende System dann zu jeder Gelenkkonfiguration einen mehrdimensionalen Vektor liefern, der angibt, wo die korrekte Effektorstellung bzw. Position relativ zu der aus den identifizierten Parametern berechneten liegt. Man erhält folgende Abweichungen (rechte Teilfigur):

- Korrekte Zielstellung (28-8)

- Erreichte Stellung ohne Kalibration (28-6)

- Erreichte Stellung nach Kalibration (28-7)

- Erreichte Stellung nach Kalibration und Fehlerkompensation durch ein lernfähiges System (nahe bei 28-8)

- Ohne Kalibration und nur mit Fehlerkompensation durch ein lernfähiges System (nahe bei 28-7)

Wesentlich hierbei ist, daß das LS nicht die inverse Kinematik des Mechanismus oder diejenigen Abweichungen lernen muß, die schon mittels formabgleichender Kalibration identifiziert wurden, sondern nur Positionsabweichungen, die den nach der formabgleichenden Kalibration verbleibenden Fehlern, d.h. Meß- und Modellfehlern geschuldet sind. Mit anderen Worten: Das LS lernt nur den Modellfehler und keine zusätzlichen Fehler, kann sich also ganz auf die dadurch verursachten Stellungsabweichungen konzentrieren. Umgekehrt formuliert: Wird das lernende System dazu eingesetzt, grobe, modellierbare Fehler zu identifizieren, so erhält man selbst bei vielen Trainingsdaten eine geringe Präzision. Erst durch die vorangehende (formabgleichende) Kalibration wird die Aufgabe des lernenden Systems auf seine eigentliche Fähigkeit und das eigentliche Problem reduziert: die Erfassung kleiner, schwer modellierbarer Restabweichungen, die nach der formabgleichen Kalibration verbleiben. Die effiziente Elimination der Restfehler - und nicht der prinzipielle Einsatz eines lernenden Systems in der Kalibration - ist ein wesentlicher Erfindungsgegenstand.

Eine solche differentielle Fehlerkompensation kann direkt zur Steuerung des Mechanismus eingesetzt werden, indem jede Komponente des vom neuronalen Netz gelieferten Korrekturvektors für die Gelenkwinkel auf die entsprechende Komponente des von der Steuerung auf Basis der identifizierten Parameter berechneten Gelenkwertvektors addiert wird.

Figur 9 zeigt die Struktur einer fehlerkompensierenden Gelenksteuerung für den Mechanismus: Ein Stellungssollwert 27-1, z.B. in kartesischen Koordinaten angegeben, wird einem Kinematikmodul 27-2 übergeben, das - basierend etwa auf den aus der Kalibration resultierenden kinematischen Parametern - die zugehörigen Gelenkkonfiguration 27-3 des Mechanismus berechnet. Diese wird nicht direkt zur Einstellung des Mechanismus verwendet, sondern sie wird noch vom lernenden System modifiziert, d.h. auf jeden Wert wird ein Korrekturwert 27-4 addiert oder subtrahiert, um zum Ergebnis 27-5 für die Einstellung der Gelenke zu kommen. Diesen Korrekturwert berechnet das lernfähige System direkt aus dem Stellungssollwert und dem Ergebnis des Kinematikmoduls, um zu der neuen Gelenkkonfiguration 27-6 zu kommen.

Zur weiteren Verbesserung des Ergebnisses können erfindungsgemäß auch noch Ergebnisse von Sensoren herangezogen werden, die die Verdrehung oder anderes wie Temperaturen erfassen.

Neue Realisierungen des erfindungsgemäßen Verfahrens lassen sich aus bekannten Realisierungen herleiten durch Vertauschung von Effektorobjekt und Referenzobjekt wie unten beispielhaft erläutert. Die neuen Realisierungen können trotz ihrer strukturellen Verwandtschaft völlig andere technologische Vor- und Nachteile besitzen als die Ursprungsrealisierung, z.B. bzgl. Kollisionsvermeidung, Effektorobjekt-Gewicht, Genauigkeit, etc. Die charakteristischen Gleichungen einer durch Vertauschung bewirkten Realisierung ergibt sich durch Variablenvertauschung aus der Ursprungsrealisierung.

Als Paare von Referenz- bzw. Effektorobjekten sind ganz unterschiedliche Ausprägungen denkbar:

i) In **Fig 10** ist das Referenzobjekt ein dünner Strahl einer elektromagnetischen Welle, z.B. ein Laserstrahl 14-1, der in weitgehend beliebiger Lage den Arbeitsraum des Mechanismus schneidet. In ausreichendem Abstand vom Laser 14-2 wird ein Photodetektor 14-3 angebracht, auf den der Laserstrahl zunächst ungehindert trifft. Das Effektorobjekt nimmt die Form eines an einem Ausleger 14-5 befestigten Unterbrecherstabs 14-4 an und hat die Aufgabe, den Laserstrahl an der Ausbreitung in Richtung auf den Photodetektor zu hindern, wenn er vom Mechanismus in eine entsprechende Lage gebracht wird. Um die Erfüllung der Kriterien zur Auswahl der Meßserie zu gewährleisten, muß der Unterbrecherstab eine ausreichende Länge haben. Für einen üblichen, mittelgroßen Industrieroboter beträgt die minimale Unterbrecherlänge ca. 100 mm; erst ab 150 mm erhält man Resultate, die industrielle Anforderungen erfüllen. Der Unterbrecherstab muß exakt gerade gefertigt werden.

Eine Variante dieser Realisierung besteht darin, daß ein Laserstrahl als eines der Kalibrationsobjekte benutzt wird und das andere aus einem eindimensionalen (geradenförmigen) binären Strahlungssensor besteht. Technisch könnte letzterer durch einen Vektor von Photodetektoren realisiert werden. In diesem Fall wird ein Signal ausgelöst, wenn der Laserstrahl einen der Photodetektoren erleuchtet. Die charakteristische Gleichung ist in beiden Fällen identisch. DieVektoren I, h, h-l, u, s definieren die Stellung der Kalibrationsobjekt und gehen in die Gleichung ein.

ii) Statt des Lichtstrahls kann ein dünner gespannter Draht zum Einsatz kommen, der vom Effektorobjekt berührt wird, und diese Berührung wird z.B. elektrisch detektiert. Zwecks Erhöhung der Genauigkeit kann die Signalauslösung als Abbruch des elektrischen Kontakts beim Abrücken des Kontaktstabes vom Draht definiert werden.

iii) Der Effektor gemäß **Figur 11** wird mit einer gerichteten Strahlungsquelle 18-1 mit einem gewöhnlichen Laserstrahl 18-1 als Effektorobjekt, ausgestattet und als Referenzobjekt dient im einfachsten Fall ein punktförmiger Sensor. Ganz analog zu den vorangehenden Beispielen wird das Signal ausgelöst, wenn Strahlung am Sensor registriert wird. Dieses Verfahren unterscheidet sich insofern von allen vorangehenden, als es ausgehend von einer Näherungsstellung offensichtlich schwierig ist, ohne Rückkopplung eine Signalstellung zu finden, da ein Punkt einer 2-dimensionalen Mannigfaltigkeit gefunden werden muß. Deshalb wird anstatt des einen punktförmigen binären Sensors eine vorzugsweise ebene, sensorbestückte Flächen 18-3 als Referenzobjekt (linke Teilfigur), in der rechten Teilfigur ist die Fläche 18-6 als Effektorobjekt und der Laser 18-4 mit Strahl 18-5 als Referenzobjekt, benutzt werden. Die Fläche ist als CCD-Matrizen oder PSDs (Positioning sensing device) ausgelegt. Die weitere Verarbeitung des Signals entspricht genau den anderen Verfahren. Vorteil des Verfahrens mit erhöhter Sensordimension ist die Beschleunigung des Kalibrationsvorgangs: zu jeder Messung bzw. Meßkonfiguration erhält man zwei charakteristische Gleichungen, folglich wird nur die Hälfte der Messungen benötigt.

Zur Laufzeit, d.h. nach Abschluß der Kalibration kann die Hardware aus Flächensensor und Strahlungsquelle dazu verwendet werden, den Roboter zu *führen,* indem Referenzobjekt und Effektorobjekt so angeordnet werden, daß alle Stellungen des Roboters während seines Arbeitsvorganges Signalstellungen sind. Der Roboter "reitet" gewissermaßen auf einem Laserstrahl. Dies wird ausgenutzt, um besonders präzise Bewegungen zu gewährleisten und kann außerdem dazu herangezogen werden, um Modellfehler zu erkennen und ein lernfähiges System zu trainieren.

iv) Bei dieser Anwendung gemäß **Figur 12** kommt als Referenzobjekt eine exakt ebene materielle Platte 15-2 zum Einsatz, wobei keine exakt ausgerichteten Kombinationen von Platten erforderlich sind. Effektorobjekt ist ein hochelastischer (Stahl-) Stab 15-1, der an seinem Ende kugelförmig ausgeprägt ist. Diese Ausprägung vermeidet die Nachteile von spitz auslaufenden Effektorobjekten. Die Berührung zwischen Fühler und Platte kann z.B. durch einen elektrischen Kontakt erfolgen; dazu müssen Kugel und Platte leitfähig sein. Darüber hinaus ist hier die Bestimmung des Skalierungsfaktors durch Abgreifen bekannter Kantenlängen der Platte möglich. Werden die Kantenstellungen im Sinne des Verfahrens durch "Abtasten" ermittelt, brauchen diese zur Bestimmung des Skalierungsfaktors nicht exakt parallel zu sein, und nur zwei gegenüberliegende Kanten müssen gerade sein. Es reicht aus, wenn eine der Kantenlängen exakt bekannt ist. Je größer die Kantenlänge, desto größer ist die betreffende Fehlerdämpfung bei der Ermittlung des Skalierungsfaktors. Je größer die Plattenoberfläche, desto besser können die Kriterien für die Wahl der Meßserie erfüllt werden.

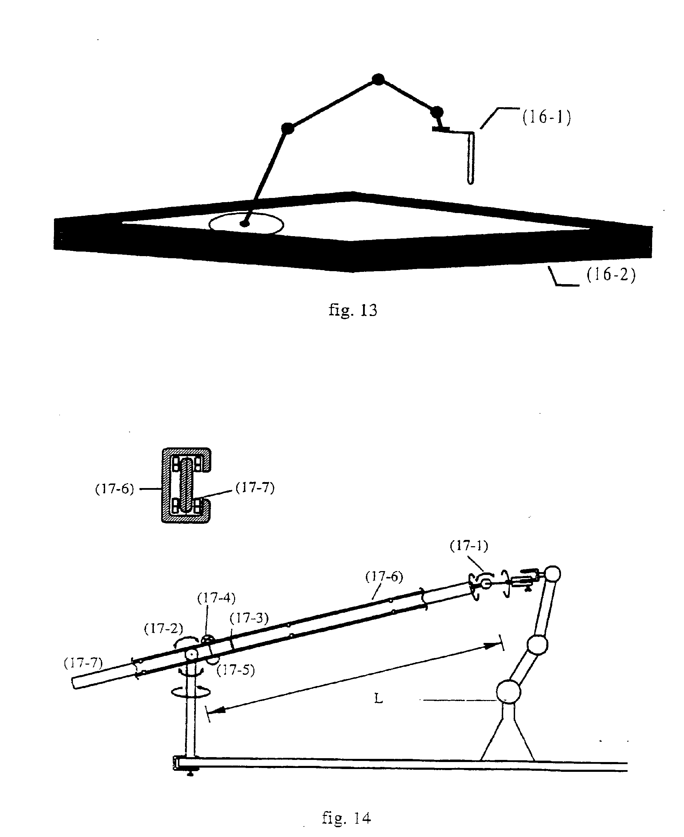

v) Alternativ wird gemäß **Figur 13** als Referenzobjekt ein Flüssigkeitsspiegel in einem Bottich 16-2 herangezogen. Die Flüssigkeitsoberfläche soll sich nach Berührung durch das als Stab 16-1 ausgebildete Effektorobjekt ausreichend schnell wieder glätten, für eine ausreichende Dämpfung ist daher zu sorgen. Die Berührung mit dem Effektorobjekt kann auch hier z.B. elektrisch detektiert werden. Die Bestimmung des Skalierungsfaktors ist durch Abgreifen des Abstands der Bottichinnenkanten möglich. Die Kanten brauchen weder exakt parallel noch gerade zu sein. Es reicht, wenn eine der Kantenlängen exakt bekannt ist. Nach jeder Einzelmessung muß die Restflüssigkeit am Effektor abgestreift werden.

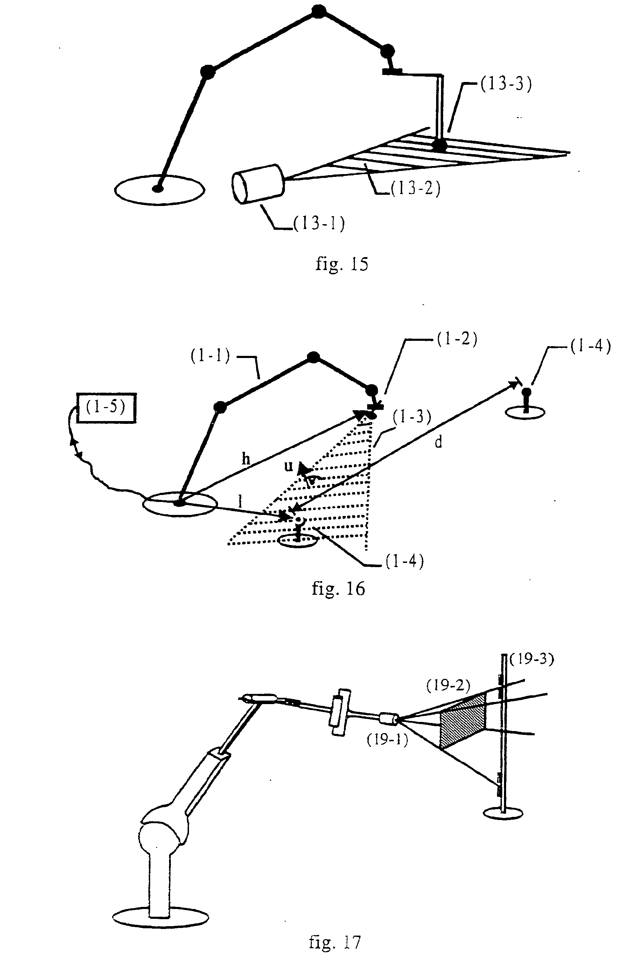

v) Bei der Realisierung in **Figur 14** kommt ein teleskopartiger Präzisionsmechanismus zum Einsatz, dessen Verbindung mit dem zu kalibrierenden Mechanismus eine kinematische Schleife erzeugt. Der röhrenförmige Teleskopinnenteil 17-7 ist gegenüber der Außenröhre 17-6 in einem weiten Bereich verschiebbar, beide bilden also ein Schubgelenk. Eine bestimmte Eintauchtiefe des Innenteils in den Außenteil kann genau detektiert werden, weil ein binärer Sensor anspricht, sobald sie erreicht ist. Realisiert werden kann dieser Sensor z.B. durch einen elektrischen Kontakt oder eine Bohrung 17-3 im Innenstab, die bei dieser Eintauchtiefe (und nur dort) eine Lichtschranke aus Lichtsender 17-4 und Lichtdetektor 17-5 freischaltet. Zur Durchführung der Kalibration wird der eine Teleskopteil über ein Kugelgelenk 17-1 in Verbindung mit dem Mechanismus gebracht, der andere wird im Abstand L über ein Kardangelenk 17-2 an einen Punkt montiert, der in bezug auf das Koordinatensystem des Mechanismus fest ist. Auf diese Weise wird erreicht, daß wie bei den anderen Beispielen bei Bewegung des Mechanismus immer dann eine Signalstellung detektiert wird, wenn Effektorobjekt 17-7 und Referenzobjekt 17-6 sich in einem bestimmten Abstand zueinander befinden. Die Auswahl der Meß- bzw. Signalstellungen geschieht hier nach den erfindungsgemäßen Regeln. Im Unterschied zu allen anderen Verfahren befinden sich hier die Kalibrationsobjekte in permanentem Kontakt, was eine nebenläufige Kalibrierung in den meisten Fällen ausschließen dürfte. Dies hat jedoch den Vorteil, daß die Erkennung des Signalereignisses mit sehr hoher Präzision stattfinden kann und die Notwendigkeit einer Fehlerelimination, wie sie bei den anderen Beispielen teilweise erforderlich ist, entfällt.

vi) In **Figur 15** ist als Referenzobjekt eine fächerförmige Ebene 13-2 aus elektromagnetischen Wellen, z.B. Licht, eingesetzt, die z.B. von einem mit einer geeigneten Optik versehenen Laser 13-1 oder einem rotierenden Laser oder mit einer Kombination aus Laser und einem rotierenden Polygonspiegel erzeugt wird. Das Effektorobjekt mit Detektor 13-3 ist in der Lage, zu erkennen, wann es auf der Lichtebene "aufsetzt". Um zu gewährleisten, daß der Signalraum maximale Dimension aufweist, muß auch bei gegenüber der Lichtebene geneigtem Detektor sicher erkannt werden, wann dieser die Lichtebene berührt. Sofern ein Detektor mit einer gewissen Richtcharakteristik verwendet wird kann es erforderlich sein, diesen mit einer Sammellinse versehen, die auch bei starker Neigung genügend Licht aus der Lichtebene zum eigentlichen Detektionselement leitet. Es ist empfehlenswert, daß diese Linse an ihrer Oberfläche die Form einer Kugel mit bekanntem Radius hat, dann vereinfacht sich die Rechnung zur Parameteridentifikation.

Der Skalierungsfaktor kann sinngemäß durch eines der genannten Verfahren bestimmt werden, z.B. durch eine zweite, parallele Lichtebene mit bekanntem Abstand zur ersten oder durch einen zweiten, in bekanntem Abstand zur ersten, montierten Lichtdetektor.

Alternativ werden gemäß **Figur 16** als Referenzobjekte zwei näherungsweise punktförmige Empfänger 1-4 für Licht verwendet, deren Empfangscharakteristik im Sinne geringer Störeinflüsse optimiert ist. Als Effektorobjekt wird eine z.B. von einem Laser 1-2 an Effektor 1-1 mittels Linienoptik oder einem rotierenden (Polygon-)Spiegel erzeugte Lichtebene 1-3 verwendet. Die Erleuchtung der Photodetektoren durch die Lichtebene definiert die Signalstellungen. Die Photodetektoren befinden sich in großem bekanntem Abstand d und ermöglichen so mittels des Computersystems 1-5 die exakte Bestimmung des Skalierungsfaktors bei großer Fehlerdämpfung, wobei die Vektoren h, h-l, l, u zur Stellungsberechnung der Objekte herangezogen werden. Die Photodetektoren müssen aufgrund ihrer Punktförmigkeit nicht zueinander ausgerichtet werden.

vi) Traditionellen Vermessungsmethoden, wie z.B. der parallaktischen Doppelbildtachymetrie aus der Landvermessung, liegen üblicherweise herkömmliche Messungen zugrunde. Aus diesen lassen sich für Spezialfälle formabgleichende Verfahren herleiten.

Eine Übertragung des erwähnten Landvermessungsverfahrens erhält man beispielsweise, wenn gemäß **Figur 17** die Quelle 19-1 einen Strahlungs- bzw. Lichtkeil 19-2 erzeugt und das Referenzobjekt Photodetektoren 19-3 sind: Es wird dann registriert, wann der Lichtkegel diese erleuchtet und wann er wieder dunkel ist. Es können beispielsweise zwei Paare von punktförmigen Photodetektoren 19-3 verwendet werden, wobei die Detektoren eines Paares unmittelbar benachbart sein müssen und die Paare in größerer Entfernung voneinander kollinear angebracht sind. Das Signal wird genau dann ausgelöst, wenn der Lichtkeil die "inneren" beiden Detektoren erleuchtet und die äußeren dunkel bleiben. Diese Anordnung überwindet typische Nachteile des Standes der Technik durch Verwendung von Sensoren höherer Dimension, in diesem Fall von Paaren kurzer, kollinear montierter Sensorzeilen mit bekanntem Abstand.

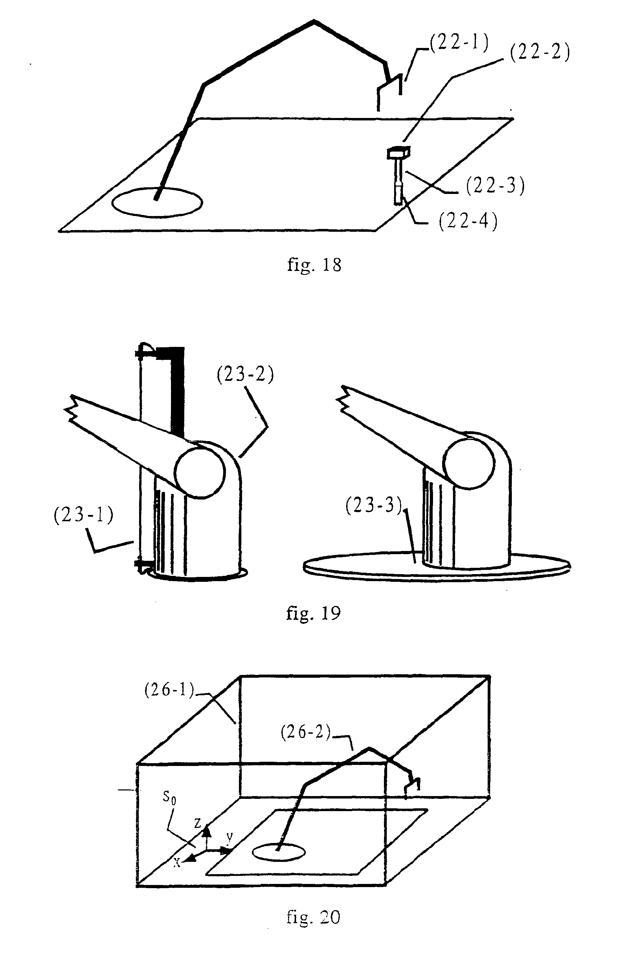

Soll das Kalibrationsverfahren im Wechsel mit den Arbeitsphasen des Mechanismus stattfinden, ohne daß ein manueller Eingriff erfolgen muß, kann die Kalibrationsumgebung automatisch hergestellt werden. Der Mechanismus ergreift durch geeignete Bewegungen selbsttätig das Effektorobjekt und ggf. auch das Referenzobjekt und bringt sie/es in eine geeignete Position. Dies geschieht dadurch, daß die Kalibrationsobjekte in einer ihrer Form angepaßten Aufnahme innerhalb des Arbeitsbereiches des Mechanismus gelagert werden. Die Kalibrationsobjekte sind gemäß **Figur 18** mechanisch fest mit einer Anpassung 22-2 verbunden, die es erlaubt, sie mit dem Effektor zu greifen. Die Anpassung muß sich in einer räumlichen Position befinden, die ihr Ergreifen durch den Effektor, einen Greifer 22-1 in der gewünschten Orientierung erlaubt. Es erleichtert das Ergreifen des Effektorobjekts 22-3 und/oder auch des Referenzobjekts, wenn das Effektorobjekt nur in einer ganz bestimmten Position in der Aufnahme 22-4 liegt, weil dann der Zugriff durch den Effektor für diese Stellung fest programmiert werden kann.

Zur Einsparung von Platz, zur Vermeidung von Planungs- und Installationsaufwand und möglicherweise auch zum Schutz der Kalibrationsobjekte kann es sinnvoll sein, diese fest in den Mechanismus zu integrieren. Zwei Möglichkeiten, wie das Referenzobjekt integraler Bestandteil des Mechanismus werden kann, sind in **Figur 19** angegeben, links für ein immaterielles Referenzobjekt, z.B. Laserstrahl 23-1, rechts für ein materielles Referenzobjekt, z.B. ebene Metallplatte 23-3. Es muß dafür Sorge getragen werden, daß das Referenzobjekt eine für das jeweilige Kalibrationsverfahren ausreichende räumliche Ausdehnung hat und daß es in einer Lage mit dem Mechanismus verbunden ist, die den ungestörten Fortgang der Kalibrierungsprozedur mit allen spezifischen Meßkonfigurationen erlaubt. Wenn konstruktive Gründe dagegen sprechen, das Referenzobjekt fest mit dem Fuß 23-2 des Mechanismus zu verbinden, kann es auch an einer anderen Stelle des Mechanismus angebracht werden. Wird es aus Sicht der Basis jedoch hinter einem oder mehreren Gelenken angebracht, kann die Kalibrierung für dieses Gelenk nicht mehr vorgenommen werden.

Wenn das gewählte Kalibrationsverfahren es zuläßt, daß ein Effektorobjekt verwendet wird, welches seinerseits den Arbeitsraum oder die Arbeitsmöglichkeiten des Mechanismus nicht oder nur unbedeutend einschränkt, dann kann auch das Effektorobjekt fest, z. B. am Effektor oder davor, d.h. am - von der Basis gesehen - letzten Gelenk der Kette, montiert werden, z. B. gemäß Fig. 6. Es verbleibt während der gesamten Nutzungsdauer des Mechanismus dort und wird während des Kalibrierungsvorgangs zweckdienlich verwendet. Neben der Einsparung von Rüstzeit hat dies des Vorteil, daß die kinematische Tranformation vom letzten Gelenk zum Effektorobjekt bekannt und unveränderlich ist und bei der Messung nicht als unbekannter Parameter identifiziert werden muß.

Weitere oder andere Vorteile erzielt man, wenn nur Teile der Effektorobjekte abgelegt und wieder aufgenommen werden. Handelt es sich bei dem Effektorobjekt beispielsweise um eine Kamera, vor der zwecks Kalibration oder der noch zu beschreibenden Interpolation eine transparente Diffusorscheibe angeordnet ist, so kann nur die Diffusorscheibe zeitweilig abgelegt werden. Hierdurch wird die Kamera für herkömmliche sensorische Zwecke nutzbar.

Geschieht das Ablegen der Diffusorscheibe ohne Erschütterung der Kamera, so steht danach insbesondere eine kalibrierte Kamera zur Verfügung.

Eine Reihe von technisch bedingten Nachteilen bei der Verwendung punktförmiger, binärer Sensoren kann vermieden werden, wenn stattdessen flächige Sensoren oder Felder von Sensoren verwendet werden. Bei einem Sensorfeld, dessen Auflösung über den gesamten Raumbereich gleich ist, kann das erwartete Signal bei jeder Messung der Meßserie von beliebigen Sensoren des Feldes aufgenommen werden und nach offensichtlicher Modifikation des mathematischen Identifikationsverfahrens verarbeitet werden. Die resultierenden Vorteile sind im einzelnen: Erhöhung der Genauigkeit wegen des Fortfalls von Schwellwert- und Signalverzögerungsfehlern, Elimination von "Diskretisierungsfehlern", Elimination von "Hysterese" oder "Reglertoleranz", Elimination der Notwendigkeit von Mehrfachmessungen zur Fehlerdämpfung, mehrfache Beschleunigung der Messung wegen des Fortfalls von Schwellwertund Signalverzögerungselimination, Präzisionssteigerung und Vereinfachung der Skalarfaktorbestimmung.

Es ist anzumerken, daß die Dimensionserhöhung am Funktionsprinzip der formabgleichenden Vermessung nichts ändert. Jede Einzelmessung kann nach wie vor auf einen einzelnen, wenn auch von Fall zu Fall wechselnden, Sensor reduziert werden. Folglich bleibt bei Verwendung höherdimensionaler Sensoren die das Verfahren definierende(n) charakteristische(n) Gleichung(en) sowie die Kriterien zur Auswahl der Meßserie unverändert.

Bei Sensorfeldern mit unterschiedlicher Auflösung sind um einen Kern mit höchster Sensordichte (Präzisionsbereich) Sensoren mit geringerer Auflösung (Grobbereich) gruppiert. Die eigentliche Messung findet nur im Präzisionsbereich statt. Nur vom Präzisionsbereich detektierte Stellungen werden als Signalstellungen definiert. Die Aufgabe des Grobbereichs besteht ausschließlich darin, das Effektorobjekt schnell zum Präzisionsbereich, d.h. in eine Signalstellung zu leiten ("Einfangen" des Effektorobjekt). Bei der technischen Realisierung strahlungsbasierter Verfahren wird man im Präzisionsbereich hochauflösende Detektorzeilen oder -matrizen, etwa CCD-Felder, im Grobbereich großflächige Fotoelemente verwenden.

Die Aussagen treffen analog auch auf Sensoren zu, die eine gleichmäßige Auflösung besitzen aber aufgrund von Fehlern - z.B. Linsenfehlern - nur in einem bekannten Teilbereich präzise arbeiten wie an zwei Beispielen dargestellt:.

a) Im Fall eines eindimensionalen Präzisionsbereichs, der durch eine CCD-Zeile realisiert wird, kann der Grobbereich von je einem rechteckförmigen Fotoelement bekannter Abmessung an jedem der längsseitigen Enden der CCD-Zeile gebildet werden.

b) Im Fall eines 0- oder 2-dimensionalen Präzisionsbereichs und Grobsensoren in Form von Ringsegmenten, die ringförmig um den Präzisionsbereich angeordnet sind, lassen sich verschiedene elementare Steuerungsalgorithmen, die das Effektorobjekt ausgehend von der nahegelegenen Näherungsstellung in eine Signalstellung leiten. Grundsätzlich führen schrauben- oder spiralförmige Suchbewegungen zum Ziel. Eine andere Alternative sind geradlinige Bewegungen, die am Übergang zu einem anderen Grobsensor im rechten Winkel fortgesetzt werden.

Bei der *off-line*-Programmierung von Industrierobotern ist es oftmals nützlich, die relative Stellung mehrerer Mechanismen $M_1$, $M_2$, ..., $M_i$, ... zueinander, z.B. zwecks Synchronisierung ihrer Arbeitsprogramme, auch durch zeitlich versetzte Messung , präzise bestimmen zu können. Dazu werden die $M_i$ mit einer hinreichenden Zahl von ortsfesten Referenzobjekten $R_1$, $R_2$, ... $R_j$, ... kalibriert und ihre Stellung zueinander nach Kalibration aus den Stellungen der $M_i$ zu den $R_j$ berechnet. Dazu ist keine Änderung des prinzipiellen Verfahrens erforderlich. Die Stellung der Referenzobjekte zueinander muß bekannt sein, was entweder durch Bestimmung der Abstände mit einem als genau kalibriert bekannten Mechanismus geschehen kann oder durch anderweitige Vermessung. Im ersten Fall kann auf diese Art und Weise eine ganze "Kette" von Mechanismen kalibriert werden, im zweiten können die Referenzobjekte zur Bestimmung des Skalierungsfaktors verwendet werden.

Ebenso ist es bei der *off*-line-Programmierung von Industrierobotern oftmals nützlich, wenn der Roboter nicht nur bezüglich seiner kinematischen Parameter vermessen werden kann, sondern wenn darüber hinaus auch seine Position bestimmt werden kann.

Gemäß **Figur 20** ist relativ zu der Arbeitszelle 26-1, in der sich zu bearbeitenden Werkstücke befinden eine Standortbestimmung zweckdienlich, wenn der Roboter etwa wegen eines Defekts, wegen Abnutzung oder wegen Typwechsels in der Zelle gegen ein anderes Exemplar ausgetauscht wird. Zu bestimmen ist also die Stellung des Mechanismus 26-2 relativ zu einem vorgegebenen Koordinatensystem $S_0$ in der Zelle 26-1. Die Stellung eines Objekts wird beispielsweise durch die relative Stellung zu mindestens zwei Geraden oder zu mindestens drei Punkten eindeutig festgelegt. Ist die Stellung von $S_0$ in bezug auf die Referenzobjekte $R_1$, $R_2$, ... $R_m$ eindeutig festgelegt, so kann die Stellung des Mechanismus in bezug auf $S_0$ mittels der erfindungsgemäßen Verfahren bestimmt werden, indem die Stellung von $R_1$, $R_2$, ... $R_m$ in bezug auf $S_0$ präzise vermessen wird, M mittels $R_1$, $R_2$, ... $R_m$ kalibriert wird und die Stellung von M bzgl. $S_0$ aus den ermittelten Stellungen von M zu $R_1$, $R_2$, ... $R_m$ mittels elementarer Methoden der Robotik bzw. Kinematik berechnet wird.

Ist der Mechanismus bereits kalibriert, so kann mit einer sehr viel kleineren Anzahl von Meßstellungen entschieden werden, wo sich $S_0$ befindet, als notwendig wäre, wenn dessen Lage und die Kalibrationsparameter bestimmt werden sollen. Das gleiche könnte erreicht werden, wenn der Effektor des Mechanismus nach dessen Kalibration in eine bestimmte Stellung bezogen auf ein in seiner Basis verankertes Bezugskoordinatensystem gebracht wird, gewissermaßen also diese exakte Stellung "zeigt" und dann eine manuelle Vermessung der Effektorstellung relativ zur Zelle vorgenommen wird. Das würde jedoch eine weitere Messung bedeuten und zusätzliche Meßfehler zur Folge haben.

Erfindungsgemäß kann die Stellung eines Mechanismus bezüglich mehrerer Referenzobjekte im Arbeitsraum bestimmt werden. Wird ein beliebiges Objekt mit Referenzobjekten ausgestattet, deren Abstand bekannt ist, so erhält man eine Spezialisierung des erfindungsgemäßen allgemeinen Kalibrationsverfahrens, welches die Vermessung von Stellungen beliebiger Objekte erlaubt. Dabei wird die Tatsache ausgenutzt, daß Parameteridentifikationsverfahren neben den eigentlich interessierenden Mechanismenparametern stets auch die Stellung der Referenzobjekte bezüglich des Bezugskoordinatensystem des Mechanismus identifizieren. Die letztere Information wird von bisherigen Kalibrationsverfahren nach der Kalibration jedoch nicht weiter verwendet. In praktischen Anwendungen werden Kalibration und Stellungsvermessung im allgemeinen nicht zur gleichen Zeit benötigt. Das erfindungsgemäße Verfahren wird daher im allgemeinen zu gegebenem Zeitpunkt nur für eine der beiden Aufgaben genutzt - im Vordergrund steht nicht die simultane Nutzung beider Leistungen sondern der isolierte oder wechselnde Einsatz für jeweils eine der Aufgaben.

Bei Nutzung des erfindungsgemäßen Verfahrens zur Stellungsvermessung wird die anfallende Information in entgegengesetzter Weise wie im Fall der Kalibration verwertet: Die Stellung der Kalibrationsobjekte steht im Vordergrund und die Identifikation der Struktur des Mechanismus wird auf das notwendige Minimum reduziert. Mechanismen, die ausschließlich zum Zweck der Stellungsvermessung konstruiert werden, können daher von einfachster Struktur sein.

Wesentliche Eigenschaft der beanspruchten bzw. beschriebenen Stellungsvermessungsverfahren ist, daß jeder beliebige, mit präzisen Gelenkencodern ausgestattete Mechanismus zum Zweck der Vermessung von Objektstellungen eingesetzt werden kann und dazu außer den Vorrichtungen zur formabgleichenden Kalibration keine weiteren Vorrichtungen oder Änderungen der Hardware benötigt werden und die Präzision der Objektvermessung deutlich gegenüber der gewöhnlichen Kalibration gesteigert werden kann. Die Steigerung wird erfindungsgemäß erreicht, indem die Zahl der Gelenke des Meßmechanismus klein gehalten wird und die Zahl der Referenzobjekte entsprechend vergrößert wird. Durch diese Maßnahme werden die wesentlichen bei der gewöhnlichen Kalibration auftretenden Restfehler reduziert, die laut der zitierten Arbeit von K. Schröer aus Modellfehlern bestehen. Diese nehmen zwangsläufig mit abnehmender Komplexität des Mechanismus ab und die Komplexität hängt so gut wie ausschließlich von der Achsenzahl ab.

Eine Vorrichtung, die sich ausschließlich zur Stellungsvermessung eignet, besteht aus einem Meßmechanismus, welcher mit mindestens einem Effektorobjekt zur formabgleichen Kalibration ausgestattet ist, sowie zugehörigen Referenzobjekten. Der Meßmechanismus muß nur ein einziges Gelenk besitzen, dessen Stellwert mittels Gelenkencodern präzise bestimmt werden kann. Insbesondere kann jeder beliebige Mechanismus als präziser Meßmechanismus benutzt werden, indem alle Gelenke bis auf eines festgehalten werden.

Die Stellung von Objekten kann präzise und direkt nur in bezug auf ein bestimmtes Koordinatensystem im Meßmechanismus ermittelt werden.

Die konkrete, modifizierte Funktionsweise wird an Ausführungsbeispielen erläutert.

Ausführungsbeispiele

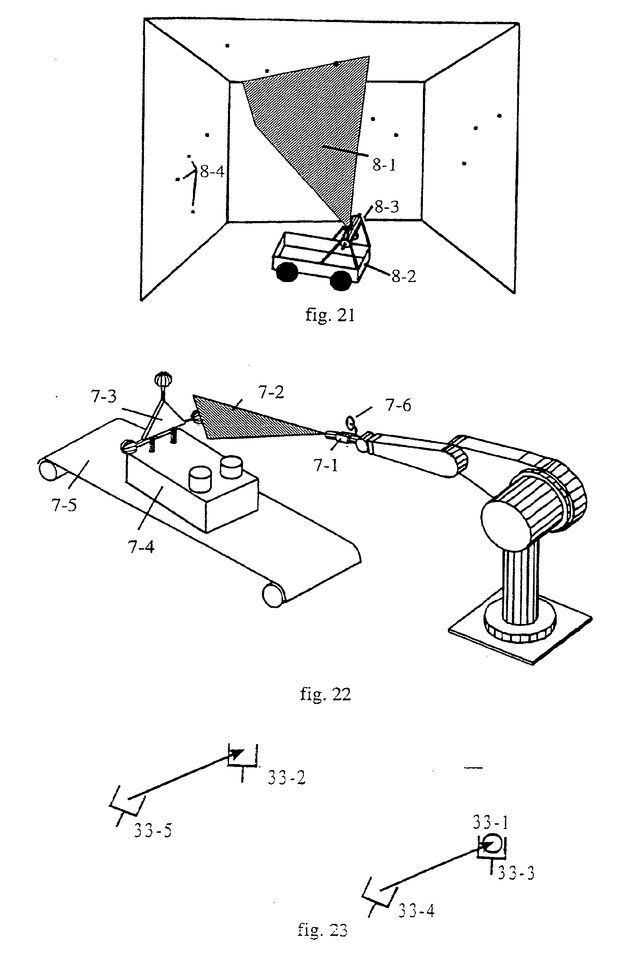

Der eingelenkige Meßmechanismus 8-2 in **Figur 21** kann seine Stellung innerhalb des Arbeitsraums erfindungsgemäß mit gesteigerter Präzision vermessen. Das Effektorobjekt 8-3 ist in diesem Fall eine Lichtebene und die Referenzobjekte 8-4 an den Wänden der Zelle sind punktförmige Photodetektoren, deren Abstand untereinander bekannt sein muß. Zwecks Stellungsvermessung wird der Meßmechanismus das Effektorobjekt um seine einzige Achse bewegen und die Signale an den Referenzobjekten werden in üblicher Weise registriert und an das zugehörige Computersystem weitergereicht.
Wurde die Lichtebene so montiert, daß die Gelenkachse in dieser Ebene liegt, so wird eine Verschiebung des Mechanismus entlang dieser Achse stets die gleichen Signale auslösen müssen. Anders gesagt kann eine Verschiebung des Mechanismus parallel zur Gelenkachse unter keinen Umständen mit dem Verfahren der Punkte 1 bis 5 erkannt werden. Folglich muß die Lichtebene zwecks vollständiger Vermessung windschief zur Gelenkachse und diese schneidend montiert werden.

In die Gelenkachse wird nun ein unbewegtes Effektorkoordinatensystem K gelegt, dessen Ursprung in dem erwähnten Schnittpunkt von Achse und Lichtebene liegt. Ist die Stellung des Effektorobjekt relativ zu K bekannt, was nach einmaliger Kalibration mit zusätzlichen Referenzobjekten vorausgesetzt werden kann, so reichen sechs Signalstellungen an sechs verschiedenen Referenzobjekten zur präzisen Bestimmung der Stellung von K bzw. der Stellung des Meßmechanismus im Raum. Zwecks Fehlerdämpfung kann man mehr als 6 Messungen machen, wobei hinreichend viele Referenzobjekte vom Mechanismus aus sichtbar sein müssen - man beachte, daß nur genau eine Signalstellung pro Referenzobjekt existiert. Mindestens für den Fachmann ist es offensichtlich, daß die Präzision der ermittelten Kalibraitonsparameter fast nur durch die Genauigkeit der Auslöser-Detektor Paare und der Gelenkencoder beschränkt wird.

Das am Beispiel dargestellte Vermessungsverfahren ist insbesondere dann kostengünstig, wenn die erforderliche Hard- und Software schon zum Zweck der Mechanismenkalibration vorhanden ist.

Sind die Referenzobjekte ähnlich wie in Figur 21 an den Wänden und der Decke der Arbeitszelle eines komplexen, (nicht notwendigerweise kalibrierten) Mechanismus angebracht, so kann dessen Effektorstellung präzise bestimmt werden, ohne die Mechanismenparameter zu kennen. Die Vermessung erfolgt erfindungsgemäß durch ausschließliche Bewegung des letzten Gelenks vor dem Effektor und Registrierung des jeweiligen signalgebenden Detektors sowie des jeweils zugehörigen Gelenkstellwertes. Dies liefert eine "unabhängige" Vermessung der Effektorstellung mit größerer Präzision als durch gewöhnliche Kalibrierung und anschließende Stellungsberechnung.

Das Verfahren des vorangehenden Beispiels hat die Stellung eines Mechanismus relativ zu stationären Referenzobjekten bestimmt. In *Figur 22* soll dagegen die Stellung eines beweglichen Objekts relativ zum Effektor des Roboters bestimmt werden. Hierzu wird das zu identifizierende Werkstück 7-4 (Quader auf dem Förderband 7-5) z.B. mit einem System von Referenzobjekten 7-3 ausgestattet, welches der Stellungsvermessung dient und nach der Bearbeitung des Werkstücks leicht, insbesondere durch den Mechanismus, entfernt werden kann. Reflektieren die drei am Werkstück angebrachten Kugeln (Referenzobjekte) die von der Quelle 7-1 ausgesandte Strahlung 7-2 und ist am Effektor zusätzlich ein Strahlungsdetektor 7-6 angebracht, so läßt sich mit drei Messungen die Stellung des Basisobjekts bzw. des Werkstücks relativ zum Effektor bestimmen.

Die Identifikation aller die Stellungsgenauigkeit beeinflussenden Kalibrations-Parameter - kurz "Kalibration" - ist eine Strategie zur globalen, gleichmäßigen Steigerung der Stellungsgenauigkeit im gesamten Arbeitsraum. Aufgrund der von Schröer diskutierten, zwangsläufigen Unzulänglichkeiten der zur Auswahl stehenden mathematischen Modelle sowie weiterer Fehlerquellen bleibt die durchschnittlich erreichte Genauigkeit zwangsläufig beschränkt. Die als Interpolation bezeichnete alternative oder ergänzende Strategie zielt dagegen auf eine gesteigerte aber nur lokale Verbesserung der Stellungsgenauigkeit ohne Korrektur von Parametern. Grundgedanke der Interpolation ist, daß eine Abweichung der vom Mechanismus angefahrenen tatsächlichen Stellung von der gewünschten Zielstellung weitgehend identisch ist zu entsprechenden Abweichungen bei dicht benachbarten Zielstellungen. Grundvoraussetzung für die Interpolation ist, daß die Stellung zumindest einiger Referenzobjekte exakt bekannt ist, z. B. durch konventionelle Vermessung.

Zwecks Interpolation werden die Referenzobjekte möglichst in der Nähe derjenigen Arbeitsraumsbereiche positioniert, in denen erhöhte Genauigkeit gewünscht wird. Insbesondere können zusätzliche Referenzobjekte primär zum Zweck der Interpolation in interessierenden Bereichen aufgestellt werden.

Das als erste Lösung bezeichnete Verfahren ermittelt mehrere einzelne Korrekturbewegungen zu verschiedenen bekannten Stellungen des Arbeitsraums, die möglichst nahe der Zielstellung zu wählen sind. Zu den verschiedenen bekannten Korrekturbewegungen wird dann durch für sich bekannte, elementare mathematische Interpolation eine Korrekturbewegung für die aktuell gewünschte Zielstellung berechnet. Ist nur eine einzige Korrekturbewegung bekannt, so wird in diesem Sonderfall unter einer Interpolation im Sinne der Erfindung eine entsprechend (parallel) versetzte Wiederholung der Korrekturbewegung an einer anderen Stelle verstanden.

Eine detaillierte Erläuterung des Verfahrens wird an Ausführungsbeispielen dargestellt. Hier werden nur die Interpolationsverfahren beansprucht, die auf der Verwendung immaterieller Referenzobjekte basieren. Der wesentliche Vorteil hierbei ist, daß es keine Kollisionen mit den Referenzobjekten geben kann und diese daher im Arbeitsraum verbleiben können! Ein zusätzlicher Vorteil ergibt sich bei speziellen Realisierungen falls das bzw. die Effektorobjekt(e) so leicht und kompakt sind, daß sie permanent an der Nutzhand verbleiben können oder konstruktiv in diese integriert werden können. Bisherige Verfahren erfordern das Auswechseln der Nutzhand gegen das "Interpolationswerkzeug" bzw. Effektorobjekt mit allen damit verbundenen Nachteilen.

In **Figur 23** wird die Interpolation anhand eines senkrecht auf der Bildebene stehenden Laserstrahls 33-1, welcher als Referenzobjekt dient, dargestellt. Positionen und Orientierungen werden durch eine schematische Roboterhand repräsentiert. Gibt es nur ein Referenzobjekt 33-1 in der Nähe der jeweiligen Zielstellung 33-2, so wird eine möglichst identische Signalstellung 33-3 , ähnliche Orientierung und minimaler Abstand, an diesem Referenzobjekt gesucht. Die Gelenkkonfiguration 33-3, in der das Signal tatsächlich ausgelöst wurde, wird sich von derjenigen unterscheiden, die man erhält, wenn die Steuerung die zur Signalstellung gehörige Gelenkkonfiguration aus den in der Steuerung abgespeicherten Mechanismenparametern und der-als exakt bekannt vorausgesetzten - Stellung des Referenzobjekts berechnet. Die letztere Gelenkkonfiguration führt den Effektor zu einer leicht von der Signalstellung abweichenden Fehlstellung 33-4. Die Differenz von 33-3 und 33-4 ergibt unmittelbar eine Korrekturbewegung in der (Zeichen-)Ebene senkrecht zum Laserstrahl 33-1, die den Effektor von 33-4 in die tatsächliche Signalstellung 33-3 überführt (Pfeil). Die - nie exakt gültige - Annahme ist nun, daß die Steuerung zwecks Erreichung der Zielstellung 33-2 in Wirklichkeit eine Gelenkkonfiguration berechnet, die den Effektor in der Stellung 33-5 positionieren wird, die den gleichen Fehler wie 33-4 in Bezug zu 33-3 aufweist. Deswegen wird eine exakt analoge Korrekturbewegung - die der Bewegung 33-4 zu 33-3 im Arbeitsraum entspricht und die auf Basis der abgespeicherten Mechanismenparameter berechnet wird - nun an der von der Steuerung berechneten, vermeintlichen Zielstellung 33-5 ausgeführt. Die dann erreichte Stellung wird nicht exakt die Zielstellung 33-2 sein (da auch 33-5 nicht exakt von der Steuerung getroffen wird), ist aber näher an 33-2 als die aus den Kalibrationsparametern berechnete Stellung.

Befinden sich drei Referenzobjekte in der Nähe der Zielstellung, so existiert zu den drei separat ermittelten Korrekturbewegungen an den Referenzobjekten aufgrund elementarer mathematischer Zusammenhänge exakt eine affine Transformation ("Dreh-Schiebung") in der Ebene, die die drei Positionen vom Typ 33-4 in die zugehörigen Positionen vom Typ 33-3 überführt. Werden mehrere Referenzobjekte und ggf. mehrere Signalstellungen an jedem der Referenzobjekte in die Interpolation einbezogen, kann man mit für sich bekannten, elementaren Methoden der Ausgleichsrechnung eine geeignete und ggf. gewichtete mittlere Korrekturbewegung errechnen, die immer präziser die Zielstellung erreichen wird.

Wünscht man im obigen Beispiel eine Korrektur nicht nur in der Ebene sondern im Raum, so ist ein einzelner zusätzlicher ,oder ein zusätzliches Bündel von parallelen, Laserstrahl(en) erforderlich, welche(r) ungefähr senkrecht auf 33-1 steht, also z. B. in der Zeichenebene liegt.

Die Interpolation wurde bisher nur mittels materieller Referenzobjekte und isoliert - ohne integrierte Kalibration - durchgeführt ( Beispielsweise der Firma Optis, und das System FMS von den Firmen Amatec und Stäubli) . Durch vorangehende Kalibration werden die Interpolationsergebnisse naturgemäß stark verbessert.

Typischerweise wird man in größeren Zeitabständen eine Kalibration gemäß dere ersten Lösung der Erfindung durchführen und bedarfsabhängig eine Interpolation gemäß der zweiten Lösung häufiger vornehmen. Die vollständige Integration von Kalibration und Interpolation in ein kohärentes Verfahren, wie hier erstmalig vorgestellt, bewirkt erhebliche zusätzliche Präzisionsgewinne und Kostenvorteile.

Ein weiterer wichtiger Aspekt einiger erfindungsgemäßer Verfahrens- und Vorrichtungsvarianten ist, daß die Kalibration und Interpolation mit der gleichen, preiswerten Hardware ohne Umbauten, etc. durchgeführt werden kann. Neben der verfahrenstechnischen Integration dieser beiden grundlegenden Präzisionssteigerungsverfahren erhält man somit auch eine Integration hinsichtlich der Vorrichtungen.

Die erfindungsgemäßen Vorrichtungen , insbesondere zur Durchführung der erfindungsgemäßen Verfahren, sind in den Ansprüchen, den oben genannten Punkten und bei den Verfahrensbeschreibungen und der Figurenerläuterung beschrieben worden.

Ein spezielles Kalibrationsobjekt, welches z.B. an einem Tripod in **Fig. 25** mit einer Lichtschranke verwendet wird und als Effektorobjekt ein orthogonales Zweibein oder sogar Dreibein 5-2 am Effektor 5-1, kann nach Durchführung von mindestens zwei separaten Kalibrierungen sogar exakt die Position des Effektors festgestellt werden, d.h. der Effektor kann in die Kalibrierung einbezogen werden. Eine Werkzeugkorrektur, wie sonst erforderlich, entfällt.

**Patentansprüche**

1. Verfahren zur Verbesserung der Stellungsgenauigkeit von Mechanismen in einem Arbeitsraum mit

   - einem in mindestens einer Achse bewegbaren, mit Toleranzen behafteten Mechanismus, der über einen Effektor verfügt,

   - mindestens einem Effektorobjekt, das in geschätzter Stellung mit Toleranz in Position und Orientierung exzentrisch zu den Achsen des Mechanismus starr mit dem Effektor verbunden ist,

   - mindestens einem immateriellen Referenzobjekt, das stationär im Arbeitsraum angeordnet ist und dessen Stellung exakt bekannt ist,

   - sowie einem Computersystem mit einem Meßablauf- und einem Mechanismus-Steuerungsprogramm,

   wobei je ein Effektor- und Referenzobjekt Paare von in für sich bekannter Weise arbeitenden Signalauslösern und Signaldetektoren bilden, geeignet eine Auslösung und Detektion mindestens binärer Signale zu bewirken und bei denen für jedes Paar die Gesamtheit der Signalstellungen des Detektors relativ zum Auslöser, in denen am Detektor ein Signal ausgelöst wird, durch mindestens eine nichttriviale charakteristische Gleichung beschreibbar ist, mit folgenden Verfahrensschritten:

   a. die Näherungsserie N so gewählt wird, daß sie an mindestens einem der Zielstellung benachbarten Referenzobjekt mindestens eine Näherungsstellung enthält,
   b. für alle Näherungsstellungen werden nacheinander durch Bewegung des Effektorobjekts bzw. Mechanismus mit einem einfachen Suchalgorithmus je eine nahegelegene Signalstellung gesucht,
   c. nach Detektion wird die momentane Gelenkkonfiguration des Mechanismus an das Computersystem weitergeleitet und als Datensatz gespeichert,
   d. das Computersystem rechnet zu jedem Datensatz diejenige Fehlstellung im Arbeitsraum aus, die sich auf Basis der der Steuerung aktuell bekannten Mechanismenparameter ergibt,
   e. aus der Differenz zwischen den Signalstellungen und den zugehörigen Fehlstellungen durch für sich bekannte elementare Interpolationsverfahren sowie durch für sich bekannte elementare Fehlerausgleichsalgorithmen eine Korrekturbewegung berechnet wird, die die Abweichung der durch die Mechanismen-Steuerung tatsächlich angesteuerten Stellung von der Sollstellung kompensiert.

2. Verfahren nach Anspruch 1, **dadurch gekennzeichnet, daß** zunächst das Verfahren nach Anspruch 1 durchgeführt wird.

3. Vorrichtung zur Ausführung des Verfahrens nach Anspruch 1 oder 2 umfassend

   - einen in mindestens einer Achse bewegbaren, mit Toleranzen behafteten Mechanismus, der über einen Effektor verfügt,

   - mindestens ein Effektorobjekt, das in geschätzter Stellung mit Toleranz in Position und Orientierung exzentrisch zu den Achsen des Mechanismus starr mit dem Effektor verbunden ist,

   - mindestens ein immaterielles Referenzobjekt, das stationär im Arbeitsraum angeordnet ist und dessen Stellung exakt bekannt ist,

   - sowie ein Computersystem mit einem Meßablauf-, Interpolations- und einem Mechanismus-Steuerungsprogramm,

   wobei je ein Effektor- und Referenzobjekt Paare von in für sich bekannter Weise arbeitenden Signalauslösern und Signaldetektoren bilden, geeignet eine Auslösung und Detektion mindestens binärer Signale zu bewirken und bei denen für jedes Paar die Gesamtheit der Signalstellungen des Detektors relativ zum Auslöser, in denen am Detektor ein Signal ausgelöst wird, durch mindestens eine nichttriviale charakteristische Gleichung beschreibbar ist.

fig. 1

(6-1)

(6-2)

d

(9-1)

d

fig. 2

d

(10-4)

(10-2)

(10-1)

(10-3)

fig. 3

fig. 4

fig. 5

(21-1)

(21-2)

(21-4)

(21-3)

(21-4)

fig. 6

(12-1)

(12-2)

z

s

(12-3)

(a)

s

s

3

2

2'

1

(b)

2'

2

1

3

(c)

fig. 7

(28-5)

(28-4)

(28-1)

(28-3)

(28-2)

(28-6)

(28-7)

(28-8)

(28-4)

fig. 8

fig. 9

fig. 10

fig. 11

fig. 12

fig. 13

fig. 14

(13-3)

(13-2)

(13-1)

fig. 15

(1-1) (1-2) (1-4)

(1-5)

(1-3)

h

u

d

l

(1-4)

fig. 16

(19-3)

(19-2)

(19-1)

fig. 17

fig. 18

fig. 19

fig. 20

fig. 21

fig. 22

fig. 23

fig. 24

fig. 25